# EUROPÄISCHE PATENTSCHRIFT

(11) **EP 3 938 695 B1**
(45) Veröffentlichungstag und Bekanntmachung des Hinweises auf die Patenterteilung: **18.10.2023**
(21) Anmeldenummer: 20705664.9
(22) Anmeldetag: 13.02.2020
(51) Int. Cl.: F16N 11/08, F16N 13/02

(54) **SCHMIERSTOFFSPENDER**
LUBRICANT DISPENSER
DISTRIBUTEUR DE LUBRIFIANT

(30) Priorität: 15.03.2019 DE 102019106681
(43) Veröffentlichungstag der Anmeldung: 19.01.2022
(73) Patentinhaber: Perma-Tec GmbH & Co. KG, 97717 Euerdorf (DE)
(72) Erfinder: EISENBACHER, Egon, 97753 Karlstadt (DE); BÜHNER, Kuno, 97772 Oberbach (DE)
(74) Vertreter: Andrejewski - Honke Patent- und Rechtsanwälte Partnerschaft mbB
(86) Internationale Anmeldenummer: PCT/EP2020/053770
(87) Internationale Veröffentlichungsnummer: WO 2020/187501

(56) Entgegenhaltungen:
- EP-A2- 1 104 867
- DE-T5-112012 000 091
- GB-A- 592 539
- JP-A- S63 219 993
- US-A1- 2016 334 058

## Beschreibung

Die Erfindung betrifft einen Schmierstoffspender, mit einem mit Schmierstoff gefüllten Vorratsbehälter und einer an den Vorratsbehälter angeschlossenen oder anschließbaren Pumpe, mit der Schmierstoff aus dem Vorratsbehälter (zu einer Auslassöffnung oder zu einer an einer Auslassöffnung angeschlossenen Schmierstelle) förderbar ist, wobei die Pumpe ein Pumpengehäuse mit einer (oberen, ersten) Einlassöffnung und einer (unteren, zweiten) Auslassöffnung, einen in dem Pumpengehäuse linear verschiebbar geführten Kolben und einen auf dem Kolben arbeitenden Antrieb aufweist,
wobei die Pumpe mit ihrem Pumpengehäuse mit dem Vorratsbehälter lösbar verbunden oder verbindbar ist und wobei der Kolben zum Fördern des Schmierstoffes von der Einlassöffnung zur Auslassöffnung mit dem Antrieb in einer Kolbenaufnahme (z. B. einem Zylinderraum) des Pumpengehäuses zyklisch bzw. periodisch anhebbar und absenkbar ist.

Derartige Schmierstoffspender werden beispielsweise zur automatisierten Schmierung von Maschinen- oder Anlagenteilen, wie z. B. Wälz- und Gleitlagern, Linearführungen, Ketten oder dergleichen eingesetzt. Die Schmierstoffspender sind beispielsweise mit einer Schmierstelle (z. B. eines Lagers) verbunden und können Schmierstoffe in Abhängigkeit von der Laufzeit einer Maschine oder in vorgegebenen Intervallen abgeben. Als Schmierstoff kommen z. B. Fette oder Öle zum Einsatz. Der Vorratsbehälter wird auch als Kartusche bezeichnet und eine solche Kartusche lässt sich lösbar und austauschbar mit der Pumpe bzw. deren Pumpengehäuse zu einer Baueinheit verbinden, z. B. durch eine Schraubverbindung, Steckverbindung, Rastverbindung, Bajonettverbindung oder dergleichen. Zum Fördern des Schmierstoffs aus dem Vorratsbehälter zur Auslassöffnung wird der Kolben mit Hilfe des Antriebes, der bevorzugt als elektromotorischer Antrieb ausgebildet ist, zyklisch angehoben und abgesenkt und damit Schmierstoff aus dem Vorratsbehälter gesaugt und aus der Auslassöffnung herausgedrückt. Ein solcher Schmierstoffspender kann insbesondere als Einzelpunkt-Schmierstoffspender ausgebildet sein, bei welchem der Schmierstoffspender mit der Auslassöffnung unmittelbar oder unter Zwischenschaltung einer Schlauchleitung mit der Schmierstelle verbunden wird. Alternativ wird der Schmierstoffspender als Mehrpunkt-Schmierstoffspender eingesetzt, bei dem mehrere Auslassöffnungen vorhanden sind oder an die Auslassöffnung eine separate Verteileinrichtung angeschlossen ist, über die mit einem einzigen Schmierstoffspender eine Vielzahl von Schmierstellen an verschiedenen Orten über Schlauchleitungen versorgt werden. Derartige Einzel- und Mehrpunktschmiersysteme sind aus der Praxis in unterschiedlichsten Ausführungsformen bekannt.

Ein Schmierstoffspender der eingangs beschriebenen Art ist z. B. aus der DE 102 34 881 B4 oder der EP1104867A2 bekannt. Der Vorratsbehälter wird mit einem Antriebskopf verbunden, bei welchem über eine Stößelanordnung mit Steuerflächen eine Drehbewegung einer Steuerfläche in eine Hubbewegung des Stößels umgewandelt und dadurch Schmierstoff aus dem Vorratsbehälter zu einem Schmierstoffauslass am Stößelende gefördert wird. Innerhalb des Vorratsbehälters ist zusätzlich ein mit einer Gewindespindel verbundener Kolben angeordnet, über den der Schmierstoff aus dem Vorratsbehälter verdrängt und dem Schmierstoffdurchlasskanal der Antriebswelle zugeführt wird.

Aus der WO 2009/068135 A1 ist ein Schmierstoffspender mit einem Vorratsbehälter und einem Auslasskanal sowie mit einem zwischen dem Vorratsbehälter und dem Auslasskanal angeordneten Pumpenelement zum Fördern von Schmierstoff bekannt, wobei das Pumpenelement einen in einem Zylinder abgedichteten und zwischen zwei Positionen verschiebbar geführten Kolben aufweist, wobei in einer Ansaugposition der Zylinder mit dem Vorratsbehälter in Strömungsverbindung steht. Der Kolben und der Zylinder sind derart aneinander angepasst, dass bei einer Bewegung des Kolbens in seiner Ansaugposition in dem Zylinder ein Unterdruck gegenüber dem Druck in dem Vorratsbehälter zum Einsaugen oder Einlassen von Schmierstoff aus dem Vorratsbehälter in dem Zylinder erzeugbar ist. Bei der entgegengesetzten Bewegung des Kolbens aus seiner Ansaugposition in dem Zylinder ist ein Überdruck zum Fördern von Schmierstoff aus dem Zylinder in den Auslasskanal erzeugbar. Zwischen dem Zylinder und dem Vorratsbehälter ist ein Rückschlagventil vorgesehen, das in seine eine Strömung aus dem Vorratsbehälter sperrende Schließstellung beaufschlagt ist. In einer Ausgestaltung dieses Schmierstoffgebers ist ein Federelement vorgesehen, welches einen Druckkolben mit einer Federkraft beaufschlagt, so dass der Schmierstoff in dem Vorratsbehälter mit einem Druck beaufschlagt wird. Dieses soll insbesondere bei hochviskosen Schmierstoffen ein verbessertes Austrittsverhalten des Schmierstoffs aus dem Vorratsbehälter ermöglichen. Alternativ kann in dem Vorratsbehälter eine Membran angeordnet sein, welcher einen mit Schmierstoff gefüllten Bereich von einem entleerten Bereich trennt. Durch den Luftdruck kann diese Membran deformiert werden, so dass der gefüllte Bereich mit zunehmender Entleerung immer kleiner wird.

Die DE 100 04 778 A1 beschreibt eine Kolbenpumpe mit Konstantdruckregelung zur Förderung von Flüssigkeiten, und zwar insbesondere zur Förderung von Kraftstoff. Saugseitig ist eine Öffnung zu einem Vorratsbehälter vorgesehen und druckseitig eine Öffnung, die mit einem Flüssigkeitsverbraucher in Verbindung steht. In einem Pumpengehäuse ist ein Zylinderraum angeordnet, in dem ein Pumpenkolben über einen Antrieb hin und her bewegbar geführt ist. Ferner ist ein Speicherraum vorgesehen, der mit dem Zylinderraum über eine durch ein Steuerventil verschließbare Überströmöffnung in Verbindung steht, in dem ein über ein Federelement belasteter Druckkolben hin und her bewegbar angeordnet ist. Bei einem Saughub des Pumpenkolbens wird Flüssigkeit aus dem Speicherraum zum Verbraucher gefördert.

Das Fördern eines Mediums aus einem Behälter mit Hilfe eines hin und her bewegbaren Kolbens ist im Zusammenhang mit Farbpumpen z. B. aus der DE 692 23 245 T2 bekannt.

Die DE 11 2012 000 091 T5 beschreibt eine elektromagnetische Pumpe, die für die Förderung einer Hydraulikflüssigkeit innerhalb eines Kraftfahrzeuges bestimmt ist. Der Zylinder dieser Pumpe weist einen gestuften Innendurchmesserabschnitt auf und in dem Zylinder ist ein Kolben geführt, der mit einem gestuften Außendurchmesserabschnitt ausgebildet ist. In den Kolben ist ein Abgaberückschlagventil mit einer federbeaufschlagten Ventilkugel integriert. Ferner ist ein Einlassrückschlagventil vorgesehen, das ebenfalls eine federbeaufschlagte Ventilkugel aufweist.

In der DE 2 336 282 wird eine Pumpe für Flüssigkeiten, insbesondere eine Schmierstoffpumpe, beschrieben, mit der ein Schmiermittel in Umlauf gesetzt wird, und zwar insbesondere bei Brennkraftmaschinen, Getrieben und dergleichen.

Die DE 10 2016 002 263 A1 beschreibt im Übrigen eine Fördervorrichtung zur Förderung eines fließfähigen Mediums, beispielsweise aus einem als Fass ausgebildeten Behälter.

Außerdem wird in der CH 630 443 eine doppeltwirkende Kolbenpumpe beschrieben.

Ein Pumpenelement für einen Schmierstoffgeber ist ferner aus der EP 2 128 443 B1 bekannt. In einem Gehäuse ist ein zylindrischer Pumpenraum gebildet, in dem ein Kolben verschiebbar angeordnet ist, wobei der Pumpenraum eine Einlassöffnung, eine mit einem Rückschlagventil versehene Auslassöffnung und wenigstens eine Bypassöffnung aufweist. Die Bypassöffnung ist derart angeordnet, dass der Kolben zur Förderung von Schmierstoff durch das Rückschlagventil in die Auslassöffnung zwischen einer die Einlassöffnung freigebenden und die Bypassöffnung verschließenden ersten Position und einer die Einlassöffnung und die Bypassöffnung verschließenden zweiten Position hin und her bewegbar ist und für eine Druckentlastung zwischen der Auslassöffnung und Einlassöffnung über die erste Position hinaus in eine die Einlassöffnung und die Bypassöffnung freigebende Entlastungsendposition zurückziehbar ist, so dass in der Entlastungsendposition die Auslassöffnung und die Einlassöffnung über einen das Rückschlagventil umgehenden Bypasskanal in Strömungsverbindung stehen.

Eine Vorrichtung zum dosierten Verteilen von Fluiden an unterschiedliche Stellen im Zusammenhang mit einer Mehrpunktschmierung wird z. B. in der DE 101 48 455 A1 beschrieben.

Die DE 10 2012 220 297 A1 behandelt eine Schmiervorrichtung, die eine Kolbenpumpe umfasst, wobei die Kolbenpumpe einen linear beweglichen Kolben aufweist, der in der Bohrung eines Zylinderelementes beweglich angeordnet ist, um eine definierte Menge Schmierstoff von einer Schmierstoffzufuhr zu einem Schmierstoffauslass zu fördern, wobei der Kolben mit einem Bewegungselement verbunden ist, mit dem er linear verbunden werden kann. Dieses Bewegungselement ist als linearer Schrittmotor ausgebildet, der ein Spindel-Mutter-System umfasst.

Ferner beschreibt die EP 2 538 126 A1 einen Schmierstoffgeber mit einem Vorratsbehälter und einer Pumpenvorrichtung, in der ein Kolben zum Fördern des Schmierstoffes hin und her bewegbar ist. Der Vorratsbehälter kann als Faltenbalg ausgebildet bzw. mit einem Faltenbalg ausgerüstet sein, der sich im Zuge der Entleerung zusammenzieht.

Auch in der DE 10 2016 101 727 A1 wird ein Schmierstoffspender mit einer Schmierstoffkartusche beschrieben. Im Vordergrund steht dabei die Tatsache, dass die Schmierstoffkartusche und der Kolben aus einem biologisch abbaubaren Kunststoff bestehen und jeweils als Spritzgussteil hergestellt sind.

Die DE 10 2008 038 580 A1 offenbart einen faltbaren Vorratsbehälter für einen Schm ierstoffversorger.

Eine weitere Ausführungsform eines Schmierstoffgebers ist z. B. aus der EP 3 330 590 A1 bekannt. Innerhalb des Vorratsbehälters ist ein Kolben angeordnet, der über eine Gewindestange im Zuge der Förderung des Mediums abgesenkt wird, so dass auch bei dieser Ausführungsform der Schmierstoff über den Kolben im Bereich der Pumpen gedrückt wird.

Um eine zuverlässige Entleerung des Vorratsbehälters und eine einwandfreie Förderung zu gewährleisten, erfolgt in der Praxis zusätzlich zu der saugenden Förderung über die Pumpe in der Regel eine Druckbeaufschlagung des Schmierstoffes, z. B. mit Hilfe eines Kolbens, und zwar insbesondere dann, wenn zähfließende Schmierstoffe bzw. Fette eingesetzt werden und/oder wenn der Schmierstoffspender bei sehr niedrigen Temperaturen betrieben werden soll. Nachteilig bei den bekannten Pumpen der Schmierstoffspender sind zum einen der komplexe und aufwändige Aufbau und zum anderen die mit Nachteilen behaftete Pumpenfunktion mit lediglich reduzierten Fördereigenschaften.

Ausgehend von dem vorbekannten Stand der Technik und den beschriebenen Nachteilen liegt der Erfindung das technische Problem zugrunde, einen Schmierstoffspender der eingangs beschriebenen Art zu schaffen, der sich bei einfachem Aufbau durch ein optimiertes Förderkonzept auszeichnet.

Zur Lösung dieser Aufgabe lehrt die Erfindung bei dem gattungsgemäßen Schmierstoffspender der eingangs beschriebenen Art, dass der Kolben gestuft mit einer einen oberen (ersten) Verdrängerraum (unterseitig) begrenzenden Kolbenfläche und einer einen unteren (zweiten) Verdrängerraum (oberseitig) begrenzenden, gegenüber der oberen Kolbenfläche reduzierten unteren Kolbenfläche ausgebildet ist, wobei der obere Verdrängerraum über ein erstes Ventil an die Einlassöffnung grenzt, wobei das erste Ventil (z. B. über Federkraft) in eine geschlossene Grundstellung beaufschlagt ist,

wobei in oder an dem Kolben eine Durchlassöffnung bzw. Kolbenöffnung integriert oder angeordnet ist, welche den oberen Verdrängerraum unter Zwischenschaltung eines zweiten Ventils mit dem unteren Verdrängerraum verbindet,
wobei der untere Verdrängerraum über einen Auslasskanal in die Auslassöffnung übergeht, wobei beim Absenken des Kolbens (z. B. aus seiner oberen Endposition) einerseits durch Entstehen eines Unterdrucks im oberen Verdrängerraum das erste Ventil (z. B. gegen Federkraft) öffnet und Schmierstoff aus dem Vorratsbehälter in den oberen Verdrängerraum gesaugt wird und andererseits das zweite Ventil (im Kolben) schließt und Schmierstoff aus dem unteren Verdrängerraum in den Auslasskanal gedrückt wird,
wobei beim Anheben des Kolbens (aus der unteren Endposition bzw. in Richtung der oberen Endposition) einerseits das erste Ventil schließt und andererseits das zweite Ventil im Kolben öffnet und sowohl Schmierstoff aus dem oberen Verdrängerraum in den unteren Verdrängerraum strömt als auch (anteilig) Schmierstoff aus dem unteren Verdrängerraum in den Auslasskanal gedrückt wird.

Der von der Kolbenaufnahme gebildete Zylinderraum bzw. Verdrängerraum, in dem der Kolben der Kolbenpumpe geführt ist, ist folglich in einen oberen Verdrängerraum und einen unteren Verdrängerraum unterteilt und zwar durch den erfindungsgemäß gestuften Kolben mit unterschiedlich dimensionierten Kolbenflächen. In Kombination mit dem ersten Ventil und insbesondere dem innerhalb des Kolbens oder an dem angeordneten zweiten Ventil wird eine doppeltwirkende, kontinuierlich fördernde Kolbenpumpe bei einem Schmierstoffspender realisiert, so dass der Schmierstoff bei jeder Kolbenbewegung und folglich sowohl beim Anheben als auch beim Absenken des Kolbens gefördert wird. Es erfolgt kein Leerhub bzw. Füllhub, um eine Kammer zu füllen. Mit nur einem Kolben wird eine kontinuierliche oder zumindest quasi kontinuierliche Förderung realisiert, das heißt, eine Förderung ohne Leerhub, bei der im Zuge jeder Kolbenbewegung Schmierstoff gefördert wird. Dieses gelingt bei konstruktiv einfachem Aufbau über die Realisierung des gestuften Kolbens mit integriertem (zweitem) Ventil, so dass ein Minimum an Teilen benötigt wird. Das System arbeitet zudem sehr wirtschaftlich, da die Antriebsenergie bei jedem Hub zum Fördern von Medium verwendet wird, ohne dass ein Leerhub zwischengeschaltet ist.

Der Antrieb für den Kolben der Pumpe ist bevorzugt als elektromotorischer Antrieb ausgebildet, und zwar bevorzugt als klassischer rotierender Antrieb, wobei die rotierende Bewegung des Antriebes bzw. der Antriebswelle in eine Hubbewegung des Kolbens umgewandelt wird. Dazu kann der Antrieb bevorzugt über ein Getriebe an den Kolben angeschlossen sein, welches eine Drehbewegung des Antriebes in eine Linearbewegung bzw. in eine Hubbewegung des Kolbens umsetzt. Besonders bevorzugt ist der elektromotorische, rotierende Antrieb mit umkehrbarer Drehrichtung ausgebildet, das heißt, die Drehrichtung des Antriebes wird zyklisch bzw. periodisch umgekehrt, so dass die zyklisch umkehrende Drehbewegung des Antriebes in eine zyklisch umkehrende Linearbewegung bzw. Hubbewegung des Kolbens umgesetzt wird.

Die Angaben "oben" sowie "unten" bzw. "Anheben" oder "Absenken" beziehen sich erfindungsgemäß nicht auf die absolute Orientierung im Raum, sondern auf die relative Bewegung bzw. relative Orientierung zum Vorratsbehälter, das heißt, der Vorratsbehälter definiert die Angabe "oben", so dass der obere Verdrängerraum dem Vorratsbehälter zugewandt und der untere Verdrängerraum dem Vorratsbehälter abgewandt ist und ein Anheben eine Bewegung in Richtung zum Vorratsbehälter und ein Absenken eine Bewegung vom Vorratsbehälter weg meint.

Vorratsbehälter einerseits und Pumpe andererseits werden erfindungsgemäß nicht nur funktionell (über eine Leitung) miteinander verbunden, sondern sie werden auch mechanisch lösbar zu einer trennbaren Baueinheit verbunden, z. B. über eine Schraubverbindung, eine Rastverbindung, eine Bajonettverbindung oder eine andere Art einer formschlüssigen Verbindung. Im Zuge des Verbindens des Pumpengehäuses mit dem Vorratsbehälter erfolgt auch eine funktionelle Verbindung der (oberen) Einlassöffnung des Pumpengehäuses mit der (unteren) Anschlussöffnung des Vorratsbehälters.

Die obere und die untere Kolbenfläche sind bevorzugt derart aufeinander abgestimmt, dass beim Anheben des Kolbens einerseits und beim Absenken des Kolbens andererseits stets derselbe Volumenstrom aus dem unteren Verdrängerraum in den Auslasskanal gefördert wird.

Wie bereits beschrieben, grenzt der obere Verdrängerraum über das erste Ventil an die Einlassöffnung, wobei dieses erste Ventil bevorzugt als Rückschlagventil ausgebildet ist, das in der Grundstellung geschlossen ist und bevorzugt mittels einer Kraft in diese geschlossene Grundstellung beaufschlagt ist, und zwar bevorzugt mittels Federkraft. Das bedeutet, dass beim Absenken des Kolbens durch Entstehen eines Unterdrucks im oberen Verdrängerraum dieses erste Ventil öffnet, vorzugsweise gegen die Federkraft. Dieses lässt sich konstruktiv in unterschiedlicher Weise realisieren. So kann z. B. das erste Ventil ein bewegliches Ventilelement und eine separate Ventilfeder aufweisen, die dieses Ventilelement beaufschlagt, und zwar bevorzugt in die geschlossene Grundstellung. Alternativ kann das erste Ventil, das ein Ansaugventil bildet, in sehr einfacher Ausgestaltung ein federndes Ventilelement aufweisen oder als federndes Ventilelement ausgebildet sein. Die Federwirkung wird folglich von dem Ventilelement erzeugt, das z. B. als einfach aufgebautes Federblech ausgestaltet sein kann. Um eine einwandfreie Dichtwirkung zu realisieren, kann ein solches Federelement z. B. als federndes Blech mit einer elastomeren Dichtfläche ausgebildet sein, das in der geschlossenen Stellung gegen eine (harte) Gegenfläche gedrückt wird. Alternativ kann jedoch auch lediglich ein federndes, hartes Blech ohne elastomere Dichtfläche verwendet werden, wobei ein solches federndes, hartes Blech in der geschlossenen Stellung dichtend gegen eine elastomere Gegenfläche gedrückt wird. In einer weiter vereinfachten Ausführungsform ließe sich auch ein Rückschlagventil ohne Feder- bzw. federndes Element realisieren, bei dem z. B. ein Ventilelement (z. B. eine Ventilkugel oder dergleichen) durch die Wirkung des zu pumpenden Mediums in einen Ventilsitz gedrückt und folglich in eine geschlossene Stellung beaufschlagt ist. Bei Entstehen eines Unterdrucks im oberen Verdrängerraum kann ein solches Ventilelement durch die Gewichtskraft in die Offenstellung gelangen.

Die bereits im Zusammenhang mit dem zweiten Ventil erwähnte Durchlassöffnung in oder an dem Kolben, z. B. in einem oberen Kolbenteil, kann z. B. als Durchbrechung innerhalb des Kolbens bzw. des Kolbenteils, z. B. als zentrale Durchbrechung oder Bohrung ausgebildet sein, in der das zweite Ventil angeordnet ist, wobei dieses zweite Ventil z. B. ein beweglich geführtes und mit einer Ventilfeder beaufschlagtes Ventilelement aufweist. Insofern kann ein Rückschlagventil in eine Durchgangsbohrung innerhalb des Kolbens bzw. Kolbenteils angeordnet sein. In alternativer Ausgestaltung kann die Durchlassöffnung von einem den Kolben bzw. dessen oberes Kolbenteil umgebenden Ringraum gebildet werden, der durch entsprechende Bemaßung z. B. zwischen dem Kolben bzw. oberen Kolbenteil und der Wandung der Kolbenaufnahme bzw. des Zylinderraums gebildet ist. Bei einer solchen Ausführungsform strömt das Medium im Zuge der Förderung folglich nicht durch den Kolben hindurch, sondern außenumfangsseitig (durch einen Ringraum) an dem Kolben vorbei. Die Funktion des zweiten Ventils übernimmt dabei z. B. eine entsprechend ausgestaltete Dichtung, die den Kolben außenumfangsseitig umgibt und die z. B. als federnde Dichtung, z. B. als V-Dichtung ausgebildet sein kann, in der der Schmierstoff in der einen Richtung vorbeiströmen kann und die den Durchgang in der anderen Richtung sperrt.

In besonders bevorzugter Ausführungsform und insbesondere zur Bildung eines minimal möglichen Totraumvolumens fährt der Kolben mit seiner oberen Kolbenfläche in der oberen Endposition (unter Reduzierung eines Totraumvolumens) unmittelbar gegen das erste Ventil, z. B. gegen ein (federbeaufschlagtes) bewegliches Ventilelement, z. B. einen Ventilteller, in dessen Schließstellung. Bevorzugt weist das erste Ventil ein federbeaufschlagtes oder federndes bewegliches Ventilelement, z. B. einen Ventilteller auf, das bzw. der in der geschlossenen Stellung bündig mit einer inneren, oberen Anschlagfläche des Gehäuses der Pumpe bzw. mit einer inneren, oberen Anschlagfläche des Zylinders für den Kolben abschließt. In der oberen Endposition fährt der Kolben mit seiner oberen Kolbenfläche unmittelbar gegen diese Anschlagfläche und das innerhalb der Anschlagfläche bündig angeordnete Ventilelement, so dass kein Totraumvolumen verbleibt bzw. ein Totraumvolumen auf ein Minimum reduziert wird. Damit wird eine selbst ansaugende Pumpe realisiert, mit der der Schmierstoff einwandfrei aus dem Vorratsbehälter gesaugt wird, ohne dass der Vorratsbehälter bzw. der Schmierstoff mit einer zusätzlichen Kraft bzw. Vorspannung (z. B. durch eine Feder) beaufschlagt werden muss. Es kann erfindungsgemäß insbesondere auf eine zusätzliche Federbelastung der Kartusche verzichtet werden und dennoch gelingt auch bei wenig fließfähigen Medien und/oder bei niedrigen Temperaturen eine einwandfreie Entleerung über die optimierte Pumpenwirkung. Durch den Verzicht auf ein Federelement kann z. B. ein Ausbluten des Fettes, das beim Stand der Technik auftreten kann, verhindert werden. Außerdem kann auf einen Kolben innerhalb des Vorratsbehälters und folglich auch auf ein Herunterspindeln bzw. Nachführen eines solchen Kolbens verzichtet werden, so dass besonders einfach aufgebaute Vorratsbehälter bzw. Kartuschen verwendet werden können und auch auf eine aufwändige Kopplung eines Kolbens bzw. einer Spindel innerhalb des Vorratsbehälters mit dem Antrieb verzichtet werden kann. Insgesamt ermöglicht die selbst ansaugende Pumpe mit minimalstem Totraumvolumen eine einwandfreie Förderung selbst zähfließender Medien bei konstruktiv sehr einfachem Aufbau von Pumpe einerseits und Vorratsbehälter andererseits. Auch wenn besonders bevorzugt auf eine derartige zusätzliche Kraftbeaufschlagung verzichtet wird, so lässt sich die erfindungsgemäße kontinuierlich fördernde Pumpe optional auch mit einer zusätzlichen Feder realisieren, und zwar beispielsweise bei extrem niedrigen Temperaturen und/oder Schmierstoffen mit besonders hoher Viskosität und folglich extrem schlechtem Fließverhalten.

Insofern wird der Schmierstoff zwar besonders bevorzugt ausschließlich saugend durch die Pumpe ohne zusätzliche Druckbeaufschlagung (durch Feder, Kolben oder dergleichen) aus dem Vorratsbehälter gefördert, das heißt, es wird eine ausschließlich selbst ansaugende Anordnung realisiert. Optional erfasst die Erfindung aber auch in der beschriebenen Weise eine Ausführungsform mit zusätzlicher Kraftbeaufschlagung, z. B. mit zusätzlicher Feder.

In bevorzugter Ausführungsform mit selbstständiger Bedeutung ist der Vorratsbehälter als im Zuge der Entleerung (selbstständig) kollabierender Behälter ausgebildet oder der Vorratsbehälter weist einen solchen kollabierenden Innenbehälter auf. Das bedeutet, dass im Zuge der Entleerung des Behälters dieser aufgrund des innerhalb des Behälters erzeugten Unterdrucks selbstständig kollabiert und der Behälterboden in Richtung zur Pumpe gesaugt wird. Damit wird ein Vorratsbehälter mit deutlich reduziertem Abfall zur Verfügung gestellt. Denn als Abfallprodukt verbleibt nicht ein Behälter mit ursprünglichem Behältervolumen, sondern lediglich der kollabierte Behälter mit deutlich reduziertem Abfallvolumen, so dass die Entsorgung vereinfacht wird. Besonders bevorzugt ist zusätzlich zu dem kollabierenden Vorratsbehälter eine starre, nicht kollabierende Schutzkappe vorgesehen, so dass der gefüllte Vorratsbehälter im montierten Zustand innerhalb dieser Schutzkappe angeordnet ist. Besonders bevorzugt lässt sich der Vorratsbehälter mit Hilfe dieser Schutzkappe an der Pumpe bzw. dem Pumpengehäuse fixieren. Die Schutzkappe selbst kann dabei wieder verwendet werden, während der Vorratsbehälter als kollabierender Innenbehälter austauschbar ist und folglich ein Wegwerfprodukt mit minimalem Restvolumen bildet.

In einer ersten Ausführungsform ist der Vorratsbehälter (oder dessen Innenbehälter) als Faltenbalg mit einem ziehharmonikaartigen Behältermantel ausgebildet. Solche Vorratsbehälter als Faltenbalg sind im Zusammenhang mit Schmierstoffspendern grundsätzlich bekannt. Erfindungsgemäß werden sie bei der beschriebenen kontinuierlich fördernden Pumpe und besonders bevorzugt bei einer selbst ansaugenden Pumpe ohne zusätzliche Federbeaufschlagung realisiert.

In einer zweiten Ausführungsform ist der Vorratsbehälter (oder dessen Innenbehälter) als kollabierender Becher mit einem dünnwandigen, flexiblen zylindrischen Bechermantel ausgebildet, ähnlich, wie es z. B. bei herkömmlichen Einweg-Trinkbechern bekannt ist. Im Zuge der Entleerung wird der Behälter- bzw. Becherboden in Richtung zur Pumpe gesaugt und dabei faltet sich der dünnwandige Bechermantel zusammen, so dass es - ähnlich wie bei einem Faltenbalg - ein Abfallprodukt mit minimalem Restvolumen verbleibt. Gegenüber einer Lösung mit Faltenbalg hat die Lösung mit kollabierendem Becher darüber hinaus den Vorteil, dass eine optimale Restentleerung erfolgen kann, da keine Restmengen innerhalb der Falten eines Faltenbalges verbleiben können.

Wie bereits beschrieben wird erfindungsgemäß der doppelt wirkende Kolben mit oberer Kolbenfläche und unterer Kolbenfläche innerhalb des Pumpengehäuses bzw. innerhalb eines in dem Pumpengehäuse realisierten Zylinderraums bzw. Verdrängerraums linear geführt. Grundsätzlich besteht die Möglichkeit, dass der Kolben innerhalb des Zylinderraums bzw. Verdrängerraums im Zuge der Hubbewegung rotiert, so dass die Drehbewegung des Motors in die Hubbewegung über eine Gewindeführung des Kolbens innerhalb des Zylinders umgesetzt wird. In bevorzugter Ausführungsform ist der Kolben jedoch drehfest und folglich nicht rotierend innerhalb des Pumpengehäuses bzw. innerhalb des Zylinderraums geführt. Dabei kann die Drehbewegung des Motors (z. B. Elektromotors) z. B. über einen Gewindetrieb umgesetzt werden, in dem eine Spindel bzw. Gewindestange drehbar geführt ist. Ein solcher Gewindetrieb kann z. B. ein Rad aufweisen, das mit einer Innenverzahnung für eine darin geführte Gewindestange bzw. Spindel ausgebildet ist, wobei die Spindel drehfest mit dem Kolben verbunden ist. Der Gewindetrieb wird über den Motor rotierend angetrieben und im Zuge dieser Drehbewegung hebt oder senkt sich die darin geführte Gewindestange und hebt oder senkt damit den Kolben.

Der Kolben ist als Stufenkolben und folglich als stufenförmig ausgebildeter Kolben realisiert, der im Querschnitt bevorzugt T-förmig ausgebildet ist. Er weist einen ersten (oberen) Kolbenteil und einen unterseitig an den ersten Kolbenteil angeschlossenen zweiten (unteren) Kolbenteil auf, wobei die Oberseite des ersten Kolbenteils die obere Kolbenfläche bildet und die Unterseite des ersten Kolbenteils die ringförmige untere Kolbenfläche bildet. Der untere Verdrängerraum kann als ringförmiger Verdrängerraum ausgebildet sein. Grundsätzlich kann der obere Verdrängerraum zylindrisch ausgebildet sein. In einer bevorzugten Variante ist der obere Verdrängerraum jedoch nicht zylindrisch ausgebildet, das heißt, er weist keinen kreisförmigen Querschnitt, sondern einen von der Kreisform abweichenden Querschnitt auf, z. B. eine ovalen Querschnitt. Damit weist auch das erste, obere Kolbenteil und damit auch die obere Kolbenfläche einen solchen Querschnitt auf. Über diese Ausgestaltung erfolgt (ohne weitere Maßnahme) eine drehfeste Anordnung des Kolbens innerhalb des Gehäuses/Zylinders, das heißt, ohne dass zusätzliche Verdrehsicherungen realisiert werden müssen. Das untere, zweite Kolbenteil kann optional jedoch einen kreisförmigen Querschnitt aufweisen.

Das erste Ventil und/oder das zweite Ventil ist/sind als Rückschlagventil ausgebildet und besonders bevorzugt als federbelastete Rückschlagventile, deren Schließelement in einer Richtung durch eine Feder geschlossen und in der anderen Richtung vom Druck des Mediums freigegeben wird. Dabei werden auch Ausführungsformen erfasst, bei denen Schließelement einerseits und Feder andererseits miteinander zu einem Bauteil kombiniert sind, z. B. durch ein selbstständig federndes Schließelement, das z. B. von einem federnden Blech oder dergleichen gebildet sein kann. Dieses gilt insbesondere für das erste Ventil. Bei dem zweiten Ventil kann z. B. in der beschriebenen Weise eine ventilbildende Dichtung eingesetzt werden, z. B. eine V-förmige Dichtung.

Grundsätzlich lässt sich die Erfindung sehr einfach mit lediglich den beiden beschriebenen Ventilen, nämlich dem ersten Ventil und dem zweiten Ventil realisieren. In einer vorteilhaften Weiterbildung der Erfindung kann jedoch zusätzlich ein drittes Ventil vorgesehen sein, und zwar in oder an der Auslassöffnung oder in dem Auslasskanal, wobei dieses dritte Ventil in Richtung des unteren Verdrängerraums, das heißt entgegen der Förderrichtung in seine OFFEN-Stellung federkraftbeaufschlagt ist.

Grundsätzlich zeichnet sich der erfindungsgemäße Schmierstoffspender mit dem ersten Ventil und dem zweiten Ventil und dem minimalen Totraumvolumen bereits durch eine einwandfrei Funktion aus, so dass selbst Lufteinschlüsse im Vorratsbehälter bzw. Lufteinschlüsse im Zuge des Aufsetzens der Kartusche auf die Pumpe nicht zu Funktionsstörungen führen. Solche Lufteinschlüsse führen bei bekannten Ausführungsformen, die lediglich einen sehr geringen Unterdruck erzeugen, zu Funktionsstörungen, da ohne die entsprechende Erzeugung von Unterdruck die Pumpenwirkung gestört und lediglich die eingeschlossene Luft komprimiert oder expandiert wird. Es wird kein ausreichender Unterdruck erzeugt und damit erfolgt auch keine Schmierstoffförderung. Durch das erfindungsgemäß minimierte Totraumvolumen wird bei der erfindungsgemäßen Ausführungsform sehr schnell ein ausreichend hoher Unterdruck aufgebaut und damit die gegebenenfalls eingeschlossene Luft weitergefördert und die Schmierstoffförderung nicht gestört. Durch das optional vorgesehene dritte Ventil wird dafür gesorgt, dass gegebenenfalls doch eingeschlossene Luft sehr viel schneller durch die Pumpe gefördert wird. Der Unterdruck, der zum Ansaugen des Mediums benötigt wird, baut sich sehr viel schneller auf. Ein manuelles Entlüften, wie es bei bekannten Pumpen erforderlich ist, findet nicht statt, das heißt, die Pumpe ist selbst entlüftend. Die Luft, die durch das dritte Ventil aus dem System herausgefördert ist, stört anschließend nicht bei der Erzeugung des Pumpenunterdruckes. Im Übrigen ist von Bedeutung, dass an den Auslass der Pumpe in der Regel ein Schlauch angeschlossen wird, der zur Schmierstelle führt. Eine solche Schlauchleitung kann sehr lang sein und diese Leitung oder die Schmierstelle kann aus unterschiedlichen Gründen verstopfen. Lange Leitungen werden teilweise unterbrochen und ein T-Stück mit einem Fettpressenanschluss dazwischen montiert. Sobald ein Monteur an diesem Anschluss eine Fettpresse ansetzt, kann er die Leitung links und rechts vom T-Stück problemlos mit einem Druck von z. B. 200 bar freiblasen. Das optional vorgesehene dritte Ventil verhindert, dass dieser hohe Druck von außen in die Pumpe gelangt. Das dritte Ventil schützt folglich die mechanischen Bauteile im Inneren des Schmierstoffspenders.

Es liegt im Rahmen der Erfindung, dass der Motor so gesteuert wird, dass der Kolben vom oberen Endabschlag bis zum unteren Endanschlag fährt und damit eine maximale Fördermenge realisiert ist. Optional lässt sich die Spendemenge jedoch flexibel stufenlos einstellen, und zwar ohne konstruktive Anpassung, sondern allein durch entsprechende Steuerung des Antriebes, indem dieser mehr oder weniger lange betrieben und damit der Hub begrenzt wird. Die Spendemenge ist folglich elektronisch stufenlos ohne mechanischen Geräteumbau vor Ort anpassbar, und zwar ausschließlich durch geeignete Ansteuerelektronik für den Motor. Das Ansaugvolumen kann durch große Dimensionierung des Verdrängerraums vergleichsweise hoch dimensioniert werden. In Verbindung mit dem minimalen Totraum kann auf diese Weise eine Pumpe mit sehr guter Ansaugfähigkeit dargestellt werden.

Grundsätzlich kann der Durchmesserunterschied bzw. der Flächenunterschied am Kolben so gestaltet werden, dass der Kolben unabhängig von der Bewegungsrichtung stets einen identischen Volumenstrom in den Auslass fördert. Alternativ kann aber der Durchmesserunterschied konstruktiv auch so gewählt werden, dass während eines Ansaugvorganges nur eine sehr kleine Fördermenge in den Auslass geschoben wird und anschließend nur jeweils kurze Hubbewegungen in Richtung des Saugventils für die weiteren Verdrängervorgänge stattfinden.

Gegenstand der Erfindung ist im Übrigen auch eine Pumpe der beschriebenen Art für einen Schmierstoffspender. Die Pumpe bildet eine separate Baueinheit, die mit dem Vorratsbehälter zu einem Schmierstoffspender zusammengesetzt wird. Die erfindungsgemäße Pumpe wird folglich auch selbstständig unter Schutz gestellt.

Außerdem betrifft die Erfindung auch einen Vorratsbehälter für einen derartigen Schmierstoffspender, das heißt, der Vorratsbehälter wird ebenfalls selbstständig unter Schutz gestellt, und zwar bevorzugt in der Ausführungsform als kollabierender Becher mit kollabierendem Bechermantel.

Zusammengefasst liegen der Erfindung unter anderem folgende Überlegungen zugrunde und insbesondere werden die im Folgenden skizzierten Schwierigkeiten beim Stand der Technik überwunden.

Einerseits besteht insbesondere bei Einzelpunkt-Schmierstoffgebern die Herausforderung bzw. das Bedürfnis, kleine erforderliche Spendemengen je Pumpenhub zu realisieren. Solche Geräte sollen in der Regel nur sehr geringe Mengen Schmierstoff (z. B. Fett) je Spendeaktion in die jeweilige Schmierstelle pressen, damit dort keine übermäßigen Druckanstiege (wie z. B. mit Handfettpressen beim manuellen Nachschmieren) entstehen. Deshalb werden die Pumpenkammern solcher Geräte üblicherweise entsprechend klein dimensioniert. Um in der Summe über viele Spenden hinweg möglichst genau die erforderlichen Schmiermengen in die Schmierstelle einzubringen, wird deshalb Wert darauf gelegt, dass diese Mengen genau eingehalten werden, damit über einen längeren Zeitraum keine Über- oder Unterschmierung stattfindet. Je kleiner das Hubvolumen einer Pumpe ist, desto störender sind aber auch kleinste Totvolumen, da diese die Unterdruckererzeugung beim Ansaugen behindern und damit die Fähigkeit reduzieren, auch Schmierfette bei niedrigen Temperaturen ansaugen zu können. Dadurch besteht beim Stand der Technik das Problem, dass schon bei geringsten Lufteinschlüssen die Füllung der Ansaugkammer behindert wird, und zwar speziell bei zähen Fördermedien. Um dem entgegenzuwirken, werden beim Stand der Technik üblicherweise zusätzliche Vordruck- bzw. Vorförderelement (wie z. B. Federn auf Vorratsbehältern etc.) eingesetzt. Dieses kann wiederum dazu führen, dass das Schmierfett im Vorratsbehälter permanent unter mehr oder minder geringem Vordruck gehalten wird und somit zum Ausbluten neigt. Alternativ werden daher auch Systeme ohne Feder aber deshalb mit zwangsgeführten Vorförderkolben eingesetzt.

Andererseits besteht in der Praxis ein Flexibilitätswunsch hinsichtlich der Fördermenge, das heißt der Wunsch, die Fördermenge je Spende nach jeweiligem Bedarf des einzelnen Anwenders anpassen zu können. Auch deshalb werden die Fördervolumina der Pumpenelemente bevorzugt sehr klein gehalten, um durch mehrere Spendehübe in direkter Folge auch etwas größere Spendemengen abbilden zu können. Dennoch fehlt im Stand der Technik die Möglichkeit, die Spendemengen beliebig einstellen zu können, da stets ein Vielfaches einer Einzelspende akzeptiert werden muss.

Diese Nachteile werden insgesamt durch das erfindungsgemäße Konzept überwunden, indem zum einen ein großes Ansaugvolumen für die Pumpe und zum anderen trotzdem ein kleines Fördervolumen vorgesehen wird. Außerdem ist mit entsprechender Ansteuerung in Verbindung mit der quasi kontinuierlichen Förderung auch während des Ansaughubes eine beliebig einstellbare Fördermenge je Spendewunsch darstellbar.

Im Folgenden wird die Erfindung anhand einer von Zeichnungen erläutert, welche lediglich Ausführungsbeispiele darstellen.
- **Fig. 1a, 1b**: einen erfindungsgemäßen Schmierstoffspender in einem Vertikalschnitt in zwei verschiedenen Funktionsstellungen,
- **Fig. 2a, 2b, 2c**: einen vergrößerten Ausschnitt aus dem Gegenstand nach den Fig. 1a, 1b in drei unterschiedlichen Funktionsstellungen,
- **Fig. 3**: einen Vorratsbehälter des Schmierstoffspenders nach den Fig. 1a, 1b in einer ersten Ausführungsform,
- **Fig.** 4: einen Vorratsbehälter in einer abgewandelten Ausführungsform,
- **Fig. 5**: eine Pumpe eines Schmierstoffspenders nach Fig. 1a ohne aufgesetzten Vorratsbehälter,
- **Fig.** 6: einen Horizontalschnitt durch den Gegenstand nach Fig. 5 (Ausschnitt),
- **Fig.** 7: einen Ausschnitt aus dem Gegenstand nach Fig. 5 im Bereich der Gewindespindel,
- **Fig.** 8: eine abgewandelte Ausführungsform des Gegenstandes nach Fig. 1b mit zusätzlicher Feder,
- **Fig.** 9: eine abgewandelte Ausführungsform einer erfindungsgemäßen Pumpe und
- **Fig.** 10: eine weitere Ausführungsform einer erfindungsgemäßen Pumpe mit zwei Auslässen in schematisch vereinfachter Darstellung (Ausschnitt),
- **Fig. 11a**: eine abgewandelte Ausführungsform des ersten Ventilelementes für die Pumpen nach Fig. 1 bis 10,
- **Fig. 11b**: eine perspektivische Darstellung des Ventilelementes nach Fig. 11a,
- **Fig. 12**: eine abgewandelte Ausführungsform des zweiten Ventilelementes für die Pumpe nach den Fig. 1 bis 10.

In den Figuren ist ein Schmierstoffspender und folglich eine Vorrichtung zur Abgabe eines Schmierstoffs dargestellt, wobei ein solcher Schmierstoffspender in seinem grundsätzlichen Aufbau einerseits einen Vorratsbehälter 1 und andererseits eine Pumpe 2 aufweist, die lösbar zu einer Baueinheit zusammensetzbar sind, das heißt, die Pumpe 2 ist mit ihrem Pumpengehäuse 3 an den Vorratsbehälter 1 anschließbar bzw. angeschlossen, so dass mit der Pumpe 2 Schmierstoff aus dem Vorratsbehälter 1 förderbar ist. Die Pumpe 2 weist ein Pumpengehäuse 3 mit einer oberen Einlassöffnung 4 und einer unteren Auslassöffnung 5 auf, wobei in dem Pumpengehäuse 3 ein Kolben bzw. Pumpenkolben 6 linear verschiebbar geführt ist. Dazu ist der Kolben 6 mit einem Antrieb 7 angetrieben, der z. B. als Elektromotor ausgebildet ist. Die Pumpe 2 ist mit ihrem Pumpengehäuse 3 unmittelbar mit dem Vorratsbehälter 1 verbunden bzw. verbindbar, das heißt, das Pumpengehäuse 3 wird mit dem austauschbaren Vorratsbehälter 1 zu einer Baueinheit zusammengefügt. Zum Fördern des Schmierstoffs von der Einlassöffnung 4 zur Auslassöffnung 5 wird der Kolben 6 in der Kolbenaufnahme 6' zyklisch mit Hilfe des Antriebes 7 angehoben und abgesenkt, das heißt der Kolben 6 wird im Zuge des Anhebens in eine erste Richtung auf den Vorratsbehälter 1 zubewegt und im Zuge des Absenkens in einer zweiten Richtung vom Vorratsbehälter 1 weg bewegt.

Der Kolben 6 ist gestuft ausgebildet, so dass er eine obere Kolbenfläche 10 aufweist, die einen oberen (ersten) Verdrängerraum 8 begrenzt und eine untere (zweite) Kolbenfläche 11, die einen unteren, zweiten Verdrängerraum 9 begrenzt. Dabei ist die untere Kolbenfläche 11 mit einer gegenüber der oberen Kolbenfläche 10 reduzierten Fläche ausgebildet, das heißt, die untere Kolbenfläche 11 ist kleiner als die obere Kolbenfläche 10. Der obere Verdrängerraum 8 grenzt über ein erstes Ventil 13 an die Einlassöffnung 4, wobei das erste Ventil 13 als Rückschlagventil ausgebildet und über die Kraft einer Ventilfeder 29 in eine geschlossene Grundstellung beaufschlagt ist. In den Kolben 6 ist eine Durchlassöffnung 12a als Kolbenöffnung integriert, welche den oberen Verdrängerraum 8 unter Zwischenschaltung eines zweiten Ventils 14 mit dem unteren Verdrängerraum 9 verbindet. Das zweite Ventil 14 ist ebenfalls als Rückschlagventil mit einer Ventilfeder 30 ausgebildet. Der untere Verdrängerraum 9 geht über einen Auslasskanal 16 in die endseitige Auslassöffnung 5 über.

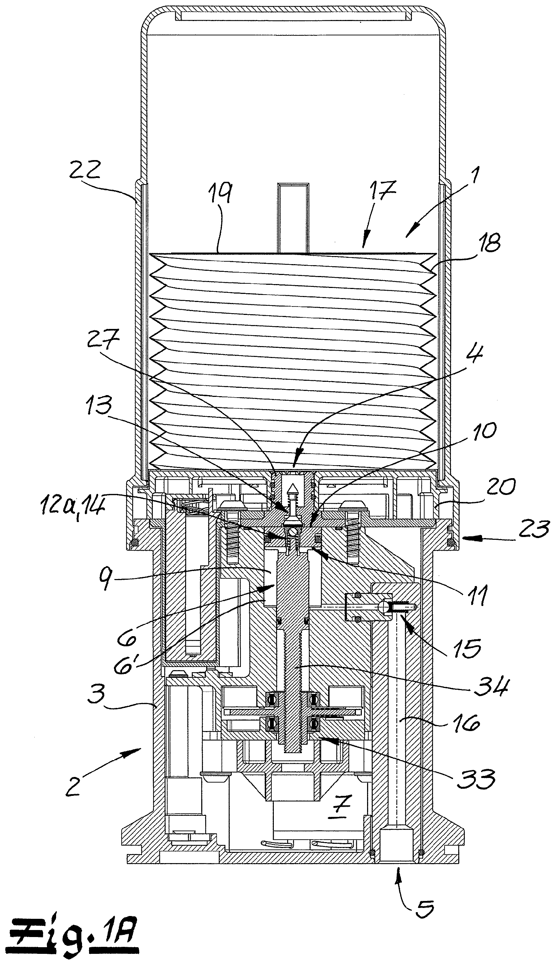

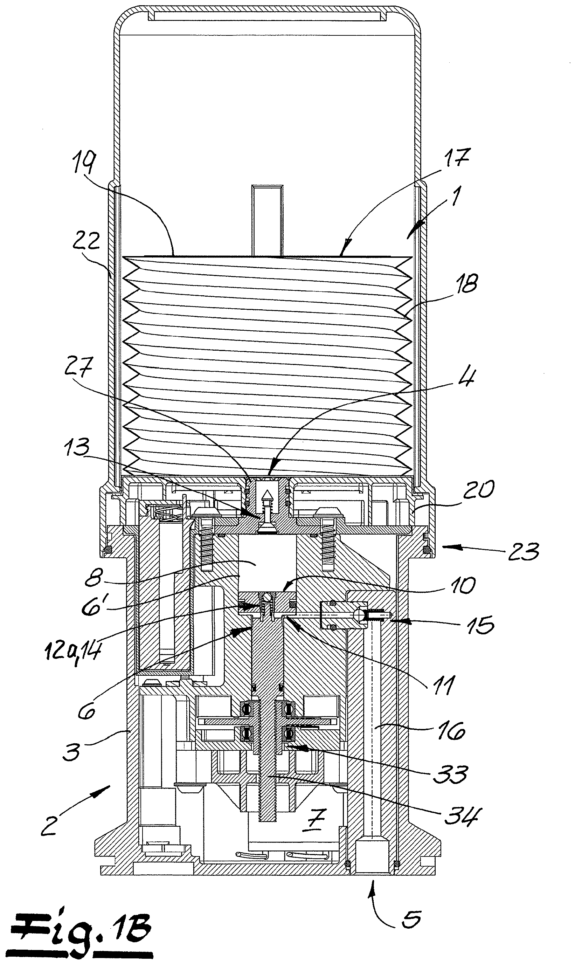

Aus einer vergleichenden Betrachtung der Fig. 1a und 1b ist erkennbar, dass beim Absenken des Kolbens 6 aus seiner oberen Endposition (Fig. 1a) einerseits durch Entstehen eines Unterdrucks im oberen Verdrängerraum 8 das erste Ventil 13 gegen die Kraft der Ventilfeder 29 öffnet und Schmierstoff aus dem Vorratsbehälter 1 in den oberen Verdrängerraum 8 gesaugt wird und andererseits das zweite Ventil 14 schließt und Schmierstoff aus dem unteren Verdrängerraum 9 in den Auslasskanal 16 in Richtung zur Auslassöffnung 5 gedrückt wird. Während Fig. 1a den Kolben 6 in der oberen Endposition zeigt, befindet sich der Kolben 6 in Fig. 1b in der unteren Endposition. Beim Anheben des Kolbens 6 aus der in Fig. 1b dargestellten Funktionsstellung in die in Fig. 1a dargestellte Funktionsstellung schließt einerseits das erste Ventil 13 und andererseits öffnet das zweite Ventil 14 im Kolben, wobei sowohl Schmierstoff aus dem oberen Verdrängerraum 8 in den unteren Verdrängerraum 9 strömt als auch (anteilig) Schmierstoff aus dem unteren Verdrängerraum 9 in den Auslasskanal 16 und damit in Richtung zur Auslassöffnung 5 gedrückt wird.

Innerhalb des Pumpengehäuses 3 ist folglich ein Zylinderraum bzw. Verdrängerraum angeordnet, in dem der Kolben 6 geführt ist, wobei dieser Zylinderraum bzw. Verdrängerraum durch den Kolben in einerseits den oberen Verdrängerraum 8 und andererseits den unteren Verdrängerraum 9 unterteilt ist. Erfindungsgemäß wird bei jeder Kolbenbewegung Schmierstoff gefördert, ohne dass ein Leerhub bzw. Füllhub realisiert ist.

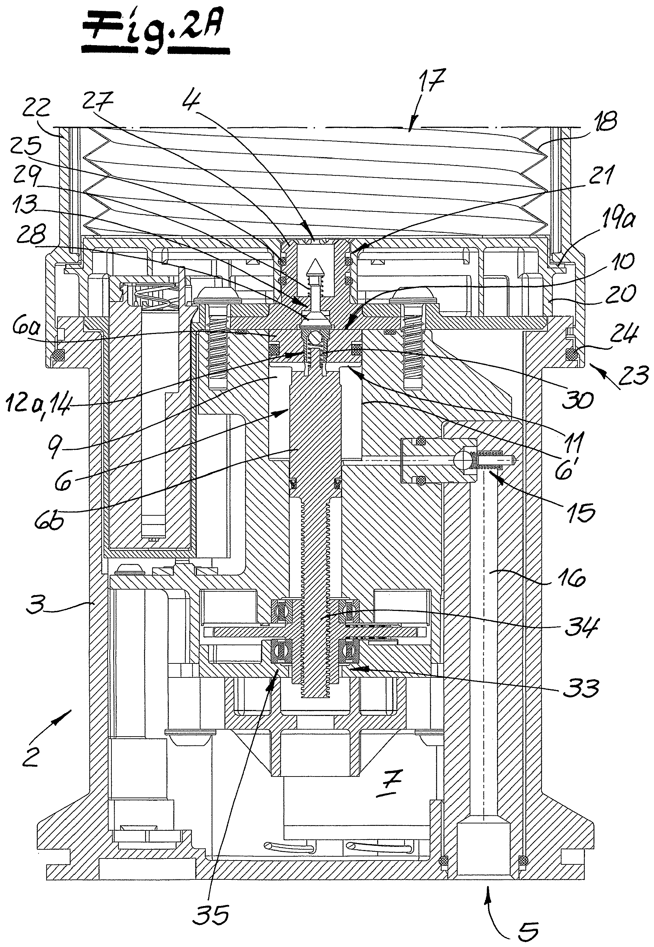

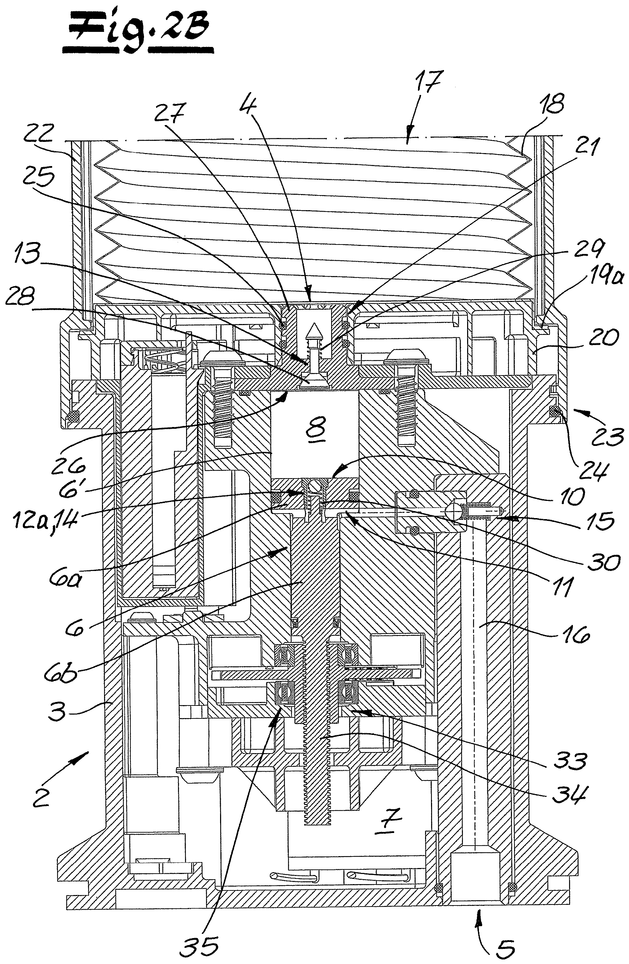

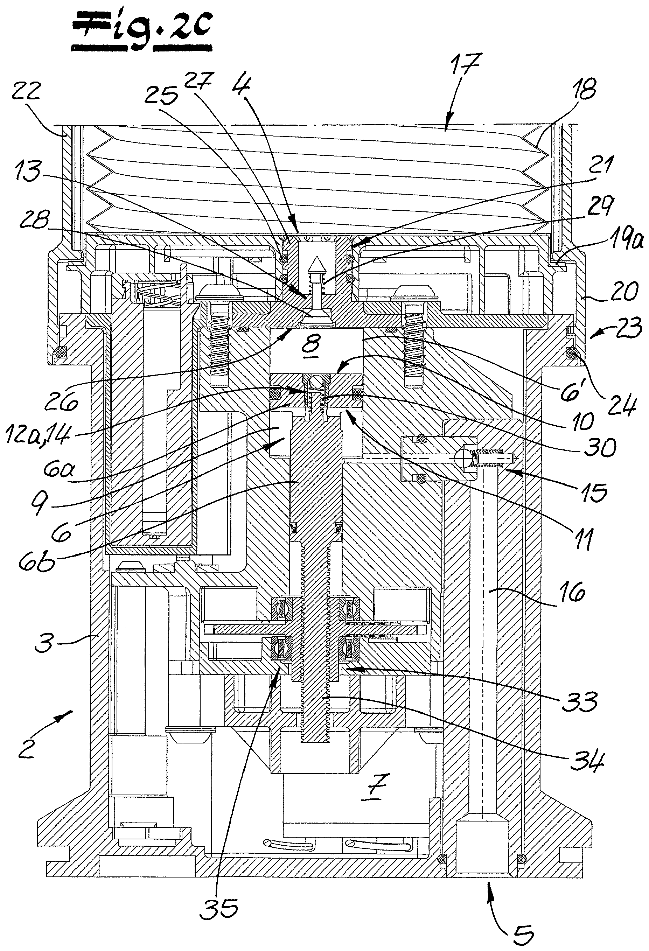

Das Funktionsprinzip ist auch anhand der Fig. 2a, 2b und 2c in der vergrößerten Darstellung erkennbar. Fig. 2a zeigt die Funktionsstellung gemäß Fig. 1a, in der der Kolben 6 sich in der oberen Endposition befindet. Dementsprechend zeigt Fig. 2b die Funktionsstellung gemäß Fig. 1b, in der sich der Kolben in der unteren Endstellung befindet. Fig. 2c zeigt eine Funktionsstellung dazwischen, das heißt der Kolben 6 befindet sich in einer Funktionsstellung zwischen der oberen Endposition nach Fig. 2a und der unteren Endposition nach Fig. 2b.

Der Antrieb 7 ist als Elektromotor ausgebildet, der mit einem eigenen (integrierten) Getriebe ausgerüstet sein kann. Der Elektromotor 7 arbeitet über ein (externes) Getriebe bzw. einen Gewindetrieb 33 auf den Kolben 6, so dass die drehende Bewegung des Elektromotors in eine Linearbewegung umgesetzt wird. Dazu ist der Gewindetrieb 33 im Ausführungsbeispiel als rotierendes Bauteil bzw. als Rad ausgebildet, in welches eine Spindel bzw. Gewindestange 34 eingreift, und zwar über ein innerhalb des Gewindetriebes 33 angeordnetes Innengewinde bzw. eine Innenverzahnung. Der Kolben 6 selbst ist drehfest innerhalb des Gehäuses bzw. innerhalb der Kolbenaufnahme 6' des Verdrängerraums 8, 9 angeordnet. Der Motor 7 treibt den Gewindetrieb 33 rotierend an. Dadurch hebt bzw. senkt sich die Spindel 34 und hebt und senkt folglich den Kolben. Der Gewindetrieb 33 ist über Lager 35 in dem Gehäuse drehbar gelagert.

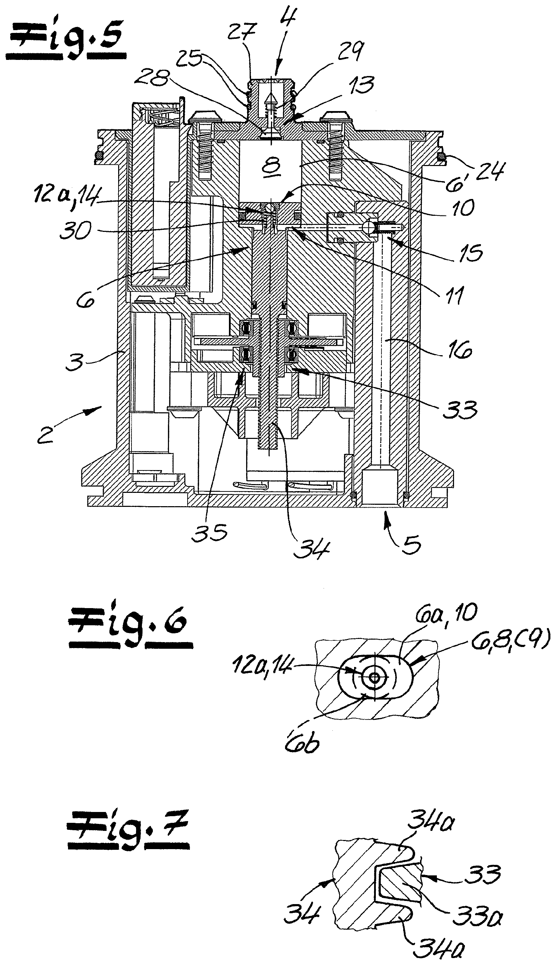

Der Kolben 6 ist - wie bereits erwähnt - drehfest in dem Pumpengehäuse 3 bzw. dem Zylinderraum 8, 9 geführt. Dabei weist der stufenförmige Kolben 6 einen ersten, oberen Kolbenteil 6a und einen unterseitig an den ersten Kolbenteil 6a angeschlossenen zweiten, unteren Kolbenteil 6b auf. Die Oberseite des ersten Kolbenteils 6a bildet die obere Kolbenfläche 10. Die Unterseite des ersten Kolbenteils 6a bildet die ringförmige untere Kolbenfläche 11. In dem dargestellten Ausführungsbeispiel weist der Kolben 6 zur drehfesten Anordnung zumindest bereichsweise einen von der Kreisform abweichenden Querschnitt auf, z. B. einen ovalen Querschnitt oder einen ellipsenförmigen Querschnitt. Dieses betrifft im Ausführungsbeispiel das erste, obere Kolbenteil 6a (vgl. Fig. 6). Der obere Verdrängerraum 8 und/oder der untere Verdrängerraum 9 sind folglich nicht zylindrisch ausgebildet, sondern sie weisen einen ovalen Querschnitt bzw. langlochförmigen Querschnitt oder ellipsenförmigen Querschnitt auf, so dass zugleich eine Verdrehsicherung realisiert ist. Der zweite, untere Kolbenteil 6b kann demgegenüber zylindrisch ausgebildet sein.

Besonders bevorzugt wird eine selbstansaugende Pumpe realisiert, bei der die Förderung des Schmierstoffs aus dem Vorratsbehälter 1 ohne zusätzliche Kraftbeaufschlagung des Schmierstoffbehälters erfolgt. Dieses gelingt durch eine Minimierung des Totraumvolumens, so dass eine einwandfreie Unterdruckerzeugung im Zuge des Pumpens erfolgt. Der Kolben 6 fährt mit seiner oberen Kolbenfläche 10 in der in Fig. 1a dargestellten oberen Endposition unter Reduzierung des Totraumvolumens unmittelbar gegen das erste Ventil 13, nämlich gegen dessen federbeaufschlagtes Ventilelement 28. Dieses Ventilelement 28 bzw. der Ventilteller 28 schließt in der geschlossenen Stellung bündig mit einer inneren, oberen Anschlagfläche 26 des Pumpengehäuses 3 ab, das heißt, der Kolben 6 liegt in der oberen Endposition mit seiner oberen Kolbenfläche 10 gegen diese obere Anschlagfläche 26 und das bündig mit der oberen Anschlagfläche 26 abschließende Ventilelement 28 an, so dass lediglich ein minimaler Totraum verbleiben kann. Dadurch lässt sich - so wie in den Fig. 1a, 1b bzw. 2a bis 2c dargestellt - eine ausschließlich selbstansaugende Pumpe ohne zusätzliche Druckbeaufschlagung und folglich ohne zusätzliche Feder oder einen zusätzlichen Kolben oder dergleichen in oder an dem Vorratsbehälter realisieren. Der Vorratsbehälter 1 ist bevorzugt als selbstständig kollabierender Behälter ausgebildet, das heißt, er fällt im Zuge der Entleerung durch die Unterdruckerzeugung selbstständig zusammen, so dass nach der Entleerung ein kollabierter Behälter als Abfallprodukt mit minimalem Restvolumen verbleibt.

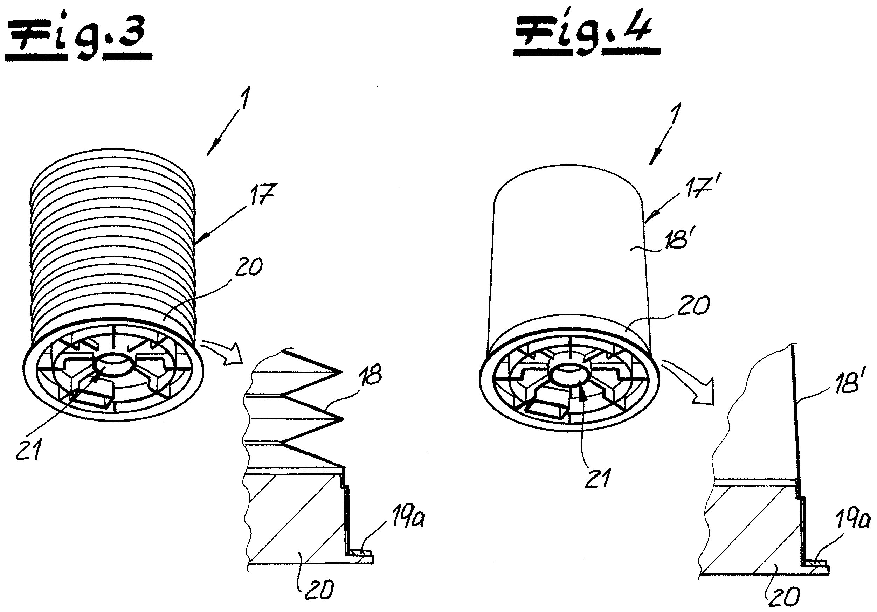

Dazu zeigen die Fig. 1a, 1b bzw. 2a bis 2c eine erste Ausführungsform, bei der der Vorratsbehälter 1 als Faltenbalg ausgebildet ist bzw. einen Faltenbalg 17 aufweist. Dieser Faltenbalg 17 weist eine ziehharmonikaartige Seitenwand 18 und eine Behälterdecke 19 auf. An dem der Behälterdecke 19 abgewandten Ende der Seitenwand 18 ist ein umlaufender Kragen 19a vorgesehen, mit dem der Faltenbalg 17 mit einem starren (den Behälterboden bildenden) Abschlussdeckel 20 verbunden ist. Ein solcher separater Vorratsbehälter 1 mit Faltenbalg 17 und Abschlussdeckel 20 ist in Fig. 3 dargestellt. Der starre Abschlussdeckel 20 weist eine Anschlussöffnung 21 auf, die im Zuge des Verbindens mit der Pumpe mit der Einlassöffnung 4 verbunden wird. Nach dem Aufsetzen des Vorratsbehälters 1 auf das Pumpengehäuse 3 erfolgt die mechanische Verbindung im Sinne einer Fixierung mit Hilfe einer Schutzkappe 22, die über eine Schraubverbindung oder eine Bajonettverbindung 23 mit dem Pumpengehäuse 3 der Pumpe 2 verbunden wird, und zwar unter Zwischenschaltung der Dichtungen 24 und 25.

Die in den Figuren dargestellten Ausgestaltungen der Seitenwand 18 des Faltenbalges 17 werden als ziehharmonikaartig bezeichnet. Grundsätzlich kann ein solcher Faltenbalg mit ziehharmonikaartiger Seitenwand aussehen wie ein Stapel von parallelen Tellerfedern, das heißt die einzelnen Falten verlaufen parallel zueinander. Eine solche Ausführungsform ist in Fig. 3 dargestellt und ist ebenfalls von dem Begriff Faltenbalg umfasst. Bei der Ausführungsform in Fig. 1a oder auch 8 weist die ziehharmonikaartige Seitenwand eine Einfach- oder auch Mehrfachschraubenlinie auf. Damit soll erreicht werden, dass sich die Falten leichter anlegen und insbesondere höhere Behälter vor einem seitlichen Ab- bzw. Einknicken gehindert werden. Außerdem kann damit die Entleerung verbessert werden, da Restmedien nicht so leicht in Falten eingeschlossen werden, sondern in den spiralförmigen Falten nach unten zum Auslass rutschen.

Zum besseren Verständnis zeigt Fig. 5 die Pumpe 2 ohne den aufgesetzten Vorratsbehälter 1 und Fig. 3 zeigt den Vorratsbehälter selbst ohne die Pumpe. Die Fig. 1a, 1b bzw. 2a bis 2c zeigen schließlich den kompletten Schmierstoffspender mit dem an die Pumpe 2 angeschlossenen Vorratsbehälter 1 und der Schutzkappe 22.

In Fig. 5 ist im Übrigen erkennbar, dass das Gehäuse 3 der Pumpe 2 einen oberen Aufsatzzapfen 27 aufweist, in den das erste Ventil 13 integriert ist. Dieser Aufsatzzapfen 27 weist außenumfangsseitig die Dichtung 25 auf und ferner ist außenumfangsseitig am Gehäuse 3 die Dichtung 24 erkennbar.

Während Fig. 3 eine Ausführungsform eines Vorratsbehälters 1 mit Faltenbalg 17 zeigt, zeigt Fig. 4 eine abgewandelte Ausführungsform eines Vorratsbehälters 1 mit einem kollabierenden Becher 17', der einen dünnwandigen Behältermantel 18' aufweist. Dieser kollabierende Becher 17' mit dünnwandigem, zylindrischem Behältermantel 18' ist wiederum mit einem Kragen 19a mit dem starren Abschlussdeckel 20 verbunden, z. B. über eine Schweißverbindung oder auch eine Klebeverbindung. Im Zuge der Entleerung faltet sich dieser dünnwandige Becher 17' bzw. dessen Bechermantel 18' zusammen, so dass ebenfalls ein Abfallprodukt mit minimalem Restvolumen verbleibt.

In Fig. 7 ist im Übrigen angedeutet, dass die Umsetzung der Drehbewegung in eine Hubbewegung mit Hilfe eines Sondergewindes ähnlich eines Trapezgewindes mit Zähnen 34a der Gewindestange 34 mit Zähnen 33a des Gewindetriebes 33 bzw. dessen Mutter realisiert werden kann. So kann die Metallspindel 34 mit einem reduzierten Traganteil, dafür aber die Kunststoffmutter 33 mit einem erhöhten Traganteil realisiert werden. Dadurch gelingt eine erhöhte Kraftaufnahme bei gleichem Bauraum. Solche Sondergewinde sind aus dem Stand der Technik für andere Anwendungsgebiete grundsätzlich bekannt und auf diese kann zurückgegriffen werden.

Ferner ist in den Figuren eine Ausführungsform dargestellt, bei der zusätzlich zu dem ersten Ventil 13 und dem zweiten Ventil 14 ein drittes Ventil 15 vorgesehen ist, und zwar in oder an der Auslassöffnung oder in dem Auslasskanal 16. Dieses ist ebenfalls als Rückschlagventil ausgebildet und entgegen der Förderrichtung in seine OFFEN-Stellung federkraftbeaufschlagt. Dieses dritte Ventil 15 sorgt dafür, dass gegebenenfalls eingeschlossene Luft sehr viel schneller durch die Pumpe befördert wird. Der Unterdruck, der zum Ansaugen des Mediums benötigt wird, baut sich sehr viel schneller auf. Ein manuelles Entlüften, wie es beim Stand der Technik erforderlich ist, findet nicht statt. Die durch das dritte Ventil 15 geförderte Luft stört folglich nicht mehr bei der Erzeugung des Pumpenunterdrucks.

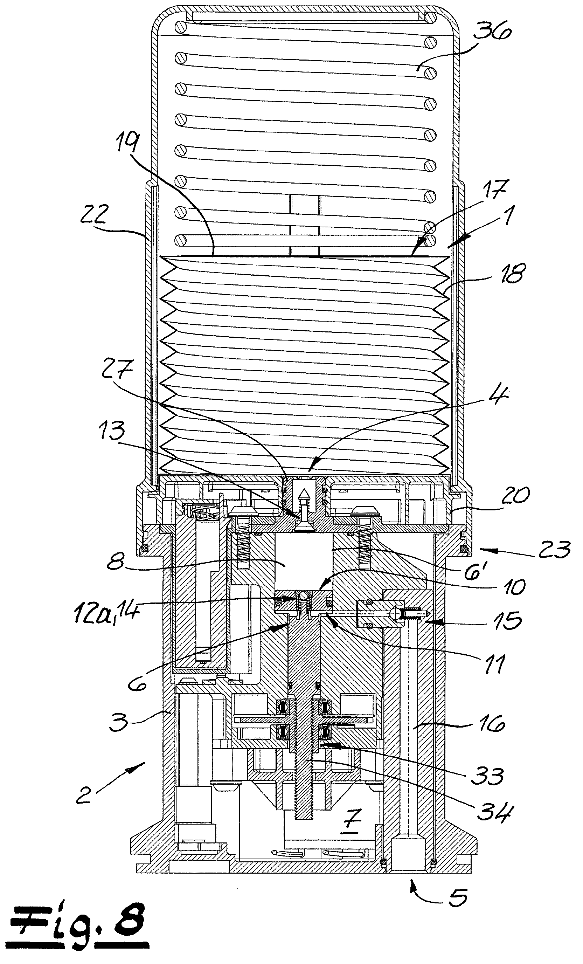

Auch wenn die erfindungsgemäße Pumpe grundsätzlich besonders bevorzugt selbst ansaugend realisiert ist und folglich ohne zusätzliche Federkraftbeaufschlagung des Vorratsbehälters gearbeitet werden kann, besteht optional doch die Möglichkeit, den Vorratsbehälter 1 zusätzlich mit einer Feder 36 zu beaufschlagen. Eine solche Variante ist beispielhaft in Fig. 8 dargestellt. Diese eignet sich z. B. für den Betrieb bei besonders niedrigen Temperaturen bzw. die Förderung von hochviskosen Schmierstoffen.

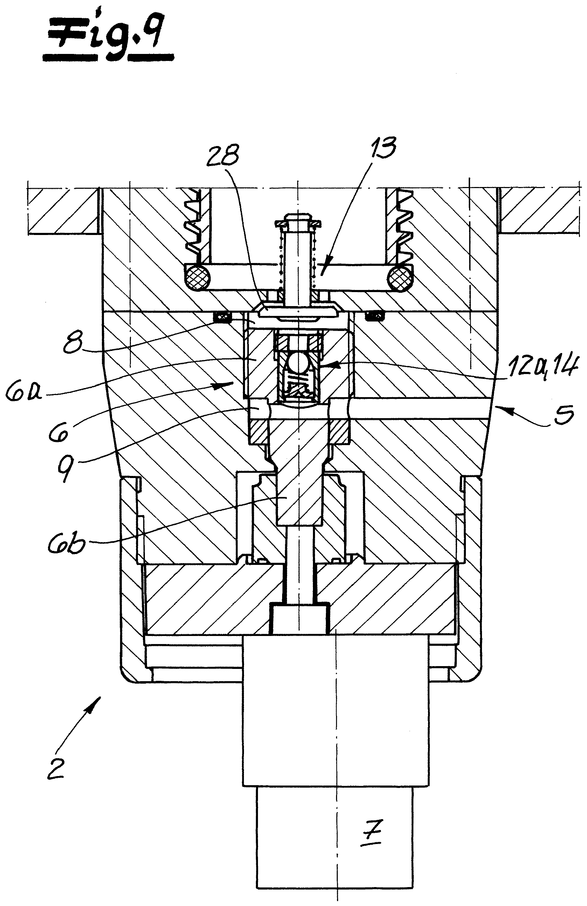

In Fig. 9 ist eine abgewandelte Ausführungsform einer Pumpe 2 dargestellt, bei welcher der Kolben 6 nicht drehfest in dem Verdrängerraum 8, 9 angeordnet ist, sondern über ein Gewinde drehbar. Die Drehbewegung des Antriebes 7 führt folglich zu einer Drehung des Kolbens und diese wird über die Gewindeankopplung unmittelbar in eine Hubbewegung des Kolbens umgesetzt. Im Übrigen sind aber in abgewandelter Ausführungsform entsprechende Teile mit denselben Bezugsziffern dargestellt, insbesondere das erste Ventil 13 und das zweite Ventil 14.

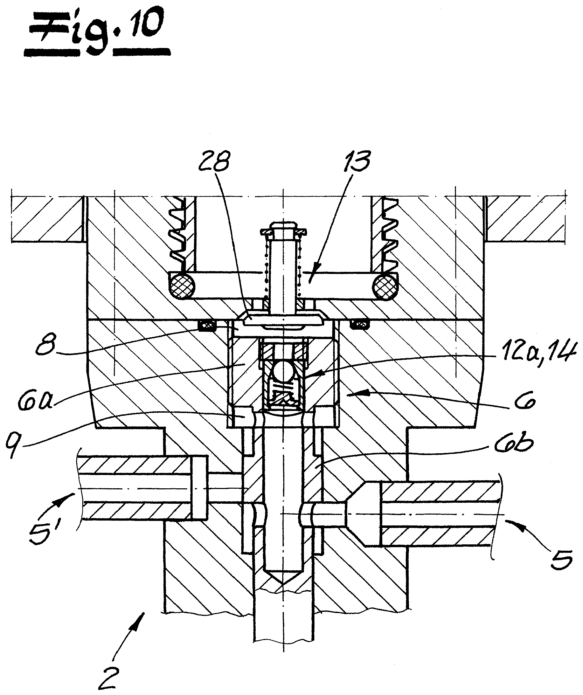

Außerdem ist in Fig. 10 eine abgewandelte Ausführungsform einer erfindungsgemäßen doppelt wirkenden Pumpe mit zwei Auslassöffnungen 5, 5' dargestellt.

Die Ausführungsformen nach den Fig. 1 bis 9 zeigen eine bevorzugte Ausführungsform mit lediglich einer einzigen Auslassöffnung 5, das heißt der Schmierstoffspender ist bevorzugt für eine Einzelpunktschmierung ausgelegt. Alternativ kann ein solcher Schmierstoffspender auch für eine Mehrpunktschmierung eingesetzt werden, wobei z. B. an die Auslassöffnung 5 eine nicht dargestellte Verteilereinrichtung angeschlossen werden kann, über die mit Hilfe von Schläuchen oder dergleichen eine Vielzahl von Schmierstellen versorgt werden können.

Anhand der Fig. 1 bis 10 war eine Ausführungsform mit einem ersten Ventil 13 beschrieben worden, welches einerseits ein bewegliches Ventilelement 28 und andererseits eine separate Ventilfeder 29 aufweist, die das bewegliche Ventilelement 28 in die geschlossene Stellung beaufschlagt.

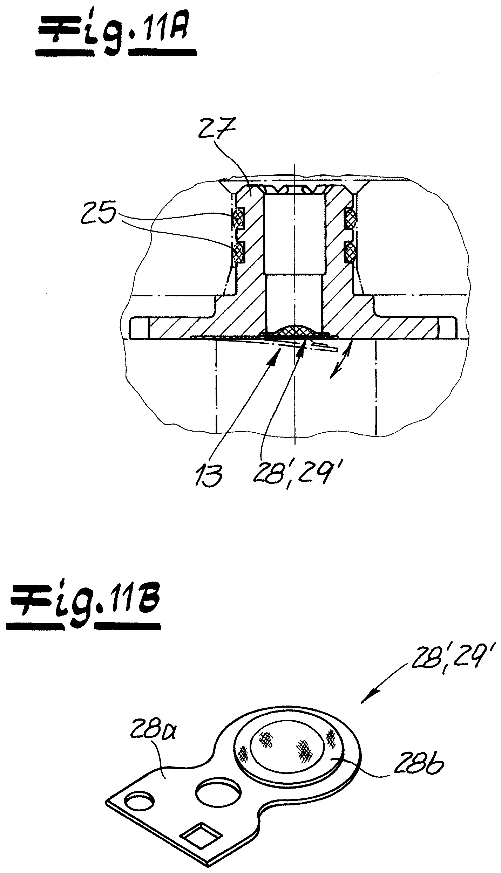

Die Fig. 11a und 11b zeigen eine abgewandelte Ausführungsform, bei der das erste Ventil 13 ein federndes Ventilelement 28' aufweist, das zugleich die Feder 29' bildet. Es handelt sich folglich um ein sehr einfach aufgebautes Ventil, das im Wesentlichen aus dem in Fig. 11b dargestellten Federblech 28', 29' besteht, und dass in seiner Grundstellung aufgrund der eigenen Federkraft in den Ventilsitz gemäß Fig. 11a beaufschlagt ist, wobei Fig. 11a den oberen Aufsatzzapfen 27 des Gehäuses 3 zeigt. In Fig. 11b ist im Übrigen angedeutet, dass das federnde Ventilelement 28', das zugleich die Feder 29' bildet, als einfaches, starres Blechteil 28a ausgebildet ist, das mit einer elastomeren Dichtfläche 28b versehen ist. Mit dieser elastomeren Dichtfläche 28b wird das Element in den entsprechenden Ventilsitz des Gehäuses gedrückt. Die in Fig. 11a, 11b dargestellte Ausgestaltung des ersten Ventils 13 kann auch bei sämtlichen Ausführungsformen nach den Fig. 1 bis 10 realisiert werden.

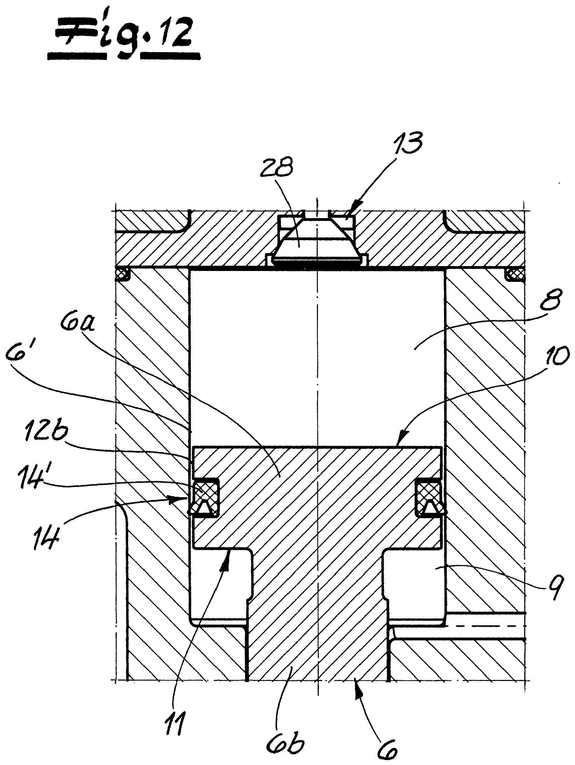

In Fig. 12 ist eine abgewandelte Ausführungsform des zweiten Ventils 14 bzw. eine abgewandelte Ausführungsform der Durchlassöffnung des Kolbens 6 dargestellt. Während bei den Ausführungsformen nach den Fig. 1 bis 10 eine Durchlassöffnung 12a als zentrale Durchbrechung 12b in den Kolben 6 bzw. das obere Kolbenteil 6a integriert ist, zeigt Fig. 12 eine abgewandelte Ausführungsform, bei welcher die Durchlassöffnung 12b von einem den Kolben 6 bzw. den oberen Kolbenteil 6a umgebenden Ringraum 12b gebildet wird. Dieser Ringraum als Durchlassöffnung 12b wird folglich durch entsprechende Dimensionierung des Außenumfangs des Kolbens 6 bzw. des Kolbenteils 6a und des Innenumfangs der Kolbenaufnahme 6' realisiert. Im Zuge der Förderung strömt das Medium folglich nicht durch eine zentrale Durchbrechung des Kolbens, sondern über den Außenumfang des Kolbens 6 hinweg durch den beschriebenen Ringraum 12b. Das zweite Ventil 14 wird in diesem Fall von einer federnden Dichtung 14' gebildet, die als im Querschnitt V-förmige Dichtung bzw. als V-Dichtung 14' ausgebildet ist, und zwar derart, dass das Medium in der Förderrichtung außen am Kolben vorbeiströmen kann und dass die V-förmige Dichtung in der entgegengesetzten Richtung eine Sperrwirkung hat. Diese Ausführungsform nach Fig. 12 lässt sich bei den beschriebenen Ausführungsformen nach den Fig. 1 bis 10 sowie 11a, 11b einsetzen und folglich mit den im Zusammenhang mit diesen Figuren beschriebenen Optionen kombinieren.

## Patentansprüche

1. Schmierstoffspender, mit einem mit Schmierstoff gefüllten Vorratsbehälter (1) und einer an den Vorratsbehälter (1) angeschlossenen oder anschließbaren Pumpe (2), mit der Schmierstoff aus dem Vorratsbehälter (1) förderbar ist,
wobei die Pumpe
- ein Pumpengehäuse (3) mit einer Einlassöffnung (4) und einer Auslassöffnung (5),
- einen in dem Pumpengehäuse (3) linear verschiebbar geführten Kolben (6) und
- einen auf den Kolben (6) arbeitenden Antrieb (7)
aufweist,
wobei die Pumpe (2) mit ihrem Pumpengehäuse (3) mit dem Vorratsbehälter (1) verbunden oder verbindbar ist, wobei der Kolben (6) zum Fördern des Schmierstoffs von der Einlassöffnung (4) zu der Auslassöffnung (5) mit dem Antrieb (7) in einer Kolbenaufnahme (6') zyklisch anhebbar und absenkbar ist,
**dadurch gekennzeichnet, dass**
der Kolben (6) gestuft mit einer einen oberen Verdrängerraum (8) begrenzenden oberen Kolbenfläche (10) und einer einen unteren Verdrängerraum (9) begrenzenden, gegenüber der oberen Kolbenfläche (10) reduzierten unteren Kolbenfläche (11) ausgebildet ist,
wobei der obere Verdrängerraum (8) über ein erstes Ventil (13) an die Einlassöffnung (4) grenzt, wobei das erste Ventil (13) in eine geschlossene Grundstellung beaufschlagt ist oder beaufschlagbar ist,
wobei in oder an dem Kolben (6) eine Durchlassöffnung (12a, 12b) angeordnet ist, welche den oberen Verdrängerraum (8) unter Zwischenschaltung eines zweiten Ventils (14) mit dem unteren Verdrängerraum (9) verbindet,
wobei der untere Verdrängerraum (9) über einen Auslasskanal (16) in die Auslassöffnung (5) übergeht, wobei beim Absenken des Kolbens (6) einerseits durch Entstehen eines Unterdrucks im oberen Verdrängerraum (8) das erste Ventil öffnet und Schmierstoff aus dem Vorratsbehälter in den oberen Verdrängerraum (8) gesaugt wird und andererseits das zweite Ventil (14) schließt und Schmierstoff aus dem unteren Verdrängerraum (9) in den Auslasskanal (16) gedrückt wird,
wobei beim Anheben des Kolbens (6) einerseits das erste Ventil (13) schließt und andererseits das zweite Ventil (14) im Kolben (6) öffnet und sowohl Schmierstoff aus dem oberen Verdrängerraum (8) in den unteren Verdrängerraum (9) strömt als auch Schmierstoff aus dem unteren Verdrängerraum (9) in den Auslasskanal (16) gedrückt wird.

2. Schmierstoffspender nach Anspruch 1, **dadurch gekennzeichnet, dass** das erste Ventil (13) mittels Federkraft in eine geschlossene Grundstellung beaufschlagt ist und beim Absenken des Kolbens (6) durch Entstehen eines Unterdrucks im oberen Verdrängerraum (8) gegen die Federkraft öffnet.

3. Schmierstoffspender nach Anspruch 2, **dadurch gekennzeichnet, dass** das erste Ventil (13) ein bewegliches Ventilelement (28) und eine das Ventilelement (28) beaufschlagende, separate Ventilfeder (29) aufweist.

4. Schmierstoffspender nach Anspruch 2, **dadurch gekennzeichnet, dass** das erste Ventil (13) ein federndes Ventilelement (28') aufweist oder als solches ausgebildet ist, welches zugleich eine Ventilfeder (29') bildet.

5. Schmierstoffspender nach einem der Ansprüche 1 bis 4, **dadurch gekennzeichnet, dass** der Kolben (6) mit seiner oberen Kolbenfläche (10) in der oberen Endposition gegen das erste Ventil (13), z. B. ein federbeaufschlagtes, bewegliches Ventilelement (28) des ersten Ventils (13) oder gegen ein von einem Federelement (30') gebildetes Ventil (13) oder Ventilelement (28'), fahrbar ist.

6. Schmierstoffspender nach einem der Ansprüche 1 bis 5, **dadurch gekennzeichnet, dass** die Durchlassöffnung (12a) in den Kolben (6), z. B. in einen oberen Kolbenteil (6a) integriert ist, z. B. als zentrale Durchbrechung (12a), in der das zweite Ventil (14) angeordnet ist, das z. B. ein beweglich geführtes und mit einer Ventilfeder (30) beaufschlagtes Ventilelement aufweist.

7. Schmierstoffspender nach einem der Ansprüche 1 bis 5, **dadurch gekennzeichnet, dass** die Durchlassöffnung (12b) von einem den Kolben (6), z. B. einen oberen Kolbenteil (6a), umgebenden Ringraum (12b) gebildet wird und dass das zweite Ventil (14) eine an dem Kolben (6), z. B. an dem oberen Kolbenteil (6a) angeordnete (federnde) Dichtung (14') aufweist oder von einer solchen gebildet wird.

8. Schmierstoffspender nach einem der Ansprüche 1 bis 7, **dadurch gekennzeichnet, dass** der Schmierstoff ausschließlich saugend mit der Pumpe (2) ohne zusätzliche Druckbeaufschlagung auf den Vorratsbehälter (1) gefördert wird.

9. Schmierstoffspender nach einem der Ansprüche 1 bis 8, **dadurch gekennzeichnet, dass** der Vorratsbehälter (1) als im Zuge der Entleerung kollabierender Behälter ausgebildet ist oder einen kollabierenden Innenbehälter aufweist.

10. Schmierstoffspender nach Anspruch 9, **dadurch gekennzeichnet, dass** der Vorratsbehälter (1) als kollabierender Becher mit zylindrischem, flexiblem Bechermantel (18') ausgebildet ist oder einen solchen kollabierenden Becher (17') aufweist oder dass der Vorratsbehälter als Faltenbalg mit ziehharmonikaartigem Behältermantel (18) ausgebildet ist oder einen solchen Faltenbalg (17) aufweist.

11. Schmierstoffspender nach einem der Ansprüche 1 bis 10, **dadurch gekennzeichnet, dass** der Antrieb (7) als elektromotorischer Antrieb ausgebildet ist, vorzugsweise als rotierender Antrieb, z. B. mit umkehrbarer Drehrichtung.

12. Schmierstoffspender nach einem der Ansprüche 1 bis 11, **dadurch gekennzeichnet, dass** der Antrieb (7) über ein Getriebe (33, 34) an den Kolben (6) angeschlossen ist, welches eine Drehbewegung des Antriebes in eine Hubbewegung bzw. Linearbewegung des Kolbens (6) umsetzt.

13. Schmierstoffspender nach einem der Ansprüche 1 bis 12, **dadurch gekennzeichnet, dass** gekennzeichnet, dass die obere Kolbenfläche (10) und die untere Kolbenfläche (11) derart aufeinander abgestimmt sind, dass beim Anheben und beim Absenken des Kolbens (6) stets dasselbe Volumen aus dem unteren Verdrängerraum in den Auslasskanal (16) oder zur Auslassöffnung (5) gefördert wird.

14. Schmierstoffspender nach einem der Ansprüche 1 bis 13, **dadurch gekennzeichnet, dass** der Kolben (6) drehfest in dem Pumpengehäuse (3), z. B. in einem Zylinderraum innerhalb des Pumpengehäuses geführt ist.

15. Schmierstoffspender nach einem der Ansprüche 1 bis 14, **dadurch gekennzeichnet, dass** der stufenförmige Kolben (6) einen ersten oberen Kolbenteil (6a) und einen unterseitig an den ersten Kolbenteil (6a) angeschlossenen zweiten Kolbenteil (6b) aufweist, wobei die Oberseite des ersten Kolbenteils (6a) die obere Kolbenfläche (10) bildet und wobei die Unterseite des ersten Kolbenteils (6a) die ringförmige untere Kolbenfläche (11) bildet.

16. Schmierstoffspender nach einem der Ansprüche 1 bis 15, **dadurch gekennzeichnet, dass** der Kolben (6) zumindest bereichsweise, z. B. der erste obere Kolbenteil (6a), einen von der Kreisform abweichenden Querschnitt, z. B. einen ovalen oder langlochförmigen oder ellipsenförmigen Querschnitt aufweist.

17. Schmierstoffspender nach einem der Ansprüche 1 bis 16, **dadurch gekennzeichnet, dass** in oder an der Auslassöffnung (5) oder im Auslasskanal (16) ein drittes Ventil (15) angeordnet ist, welches in Richtung des unteren Verdrängerraums (8, 9) beaufschlagt ist.

18. Pumpe (2) für einen Schmierstoffspender nach einem der Ansprüche 1 bis 17, mit einem Pumpengehäuse (3), mit einer Einlassöffnung (4) und einer Auslassöffnung (5) und einem in dem Pumpengehäuse (3) linear verschiebbar geführten Kolben (6) sowie einem auf den Kolben (6) arbeitenden Antrieb (7),
wobei der Kolben (6) zum Fördern des Schmierstoffes von der Einlassöffnung (4) zur Auslassöffnung (5) mit dem Antrieb (8) zyklisch anhebbar und absenkbar ist, **dadurch gekennzeichnet, dass**
der Kolben (6) gestuft mit einer einen oberen Verdrängerraum (8) begrenzenden Kolbenfläche und einem einen unteren Verdrängerraum (9) begrenzenden, gegenüber der oberen Kolbenfläche reduzierten unteren Kolbenfläche ausgebildet ist,
wobei der obere Verdrängerraum (8) über ein erstes Ventil (12) an die Einlassöffnung (4) grenzt, wobei das erste Ventil (13) in eine geschlossene Grundstellung beaufschlagt ist,
wobei in oder an dem Kolben (6) eine Durchlassöffnung (12a, 12b) angeordnet ist, welche den oberen Verdrängerraum (8) unter Zwischenschaltung eines zweiten Ventils (14) mit dem unteren Verdrängerraum (9) verbindet,
wobei der untere Verdrängerraum (9) über einen Auslasskanal (16) in die Auslassöffnung (5) übergeht,
wobei beim Absenken des Kolbens (6) einerseits durch Entstehen eines Unterdrucks im oberen Verdrängerraum (8) das erste Ventil (13) z. B. gegen Federkraft öffnet und Schmierstoff aus einem Vorratsbehälter (1) in den oberen Verdrängerraum (8) saugbar ist und andererseits das zweite Ventil (14) schließt und Schmierstoff aus dem unteren Verdrängerraum (9) in den Auslasskanal (16) drückbar ist,
wobei beim Anheben des Kolbens (6) einerseits das erste Ventil (13) schließt und andererseits das zweite Ventil (14) im Kolben (6) öffnet und sowohl Schmierstoff aus dem oberen Verdrängerraum (8) in den unteren Verdrängerraum (9) strömt als auch anteilig Schmierstoff aus dem unteren Verdrängerraum (9) in den Auslasskanal (16) gedrückt wird.

19. Vorratsbehälter (1) für einen Schmierstoffspender nach einem der Ansprüche 1 bis 17, wobei der Vorratsbehälter (1) an eine Pumpe (2) des Schmierstoffspenders anschließbar ist,
**dadurch gekennzeichnet, dass** der Vorratsbehälter (1) als im Zuge der Entleerung kollabierender Behälter ausgebildet ist oder einen kollabierenden Innenbehälter aufweist, wobei der Vorratsbehälter (1) als kollabierender Becher (17) mit zylindrischem, flexiblem Bechermantel (18') ausgebildet ist oder einen solchen Bechermantel aufweist.

20. Vorratsbehälter nach Anspruch 19, wobei der flexible, zylinderförmige Bechermantel mit einem starren Abschlussdeckel (20) verbunden ist. z. B. stoffschlüssig verbunden ist, wobei der starre Abschlussdeckel eine Anschlussöffnung (21) für den Austritt des Schmierstoffes aufweist, wobei der starre Abschlussdeckel für die Verbindung des Vorratsbehälters (1) mit einer Pumpe ausgebildet ist.

## Claims

1. A lubricant dispenser comprising a storage container (1) filled with lubricant and a pump (2), which is connected to or can be connected to the storage container (1) and by means of which lubricant can be pumped out of the storage container (1),
wherein the pump has
- a pump housing (3) with an inlet opening (4) and an outlet opening (5),
- a piston (6) that is movably guided in the pump housing (3) in a linear manner and
- a drive (7) that acts upon the piston (6),
wherein the pump housing (3) of the pump (2) is connected to or can be connected to the storage container (1), and wherein the piston (6) can be raised and lowered cyclically in a piston receptacle (6') by means of the drive (7) in order to convey the lubricant from the inlet opening (4) to the outlet opening (5),
**characterized in that**
the piston (6) is designed in a stepped manner with an upper piston surface (10), which delimits an upper displacement chamber (8), and a lower piston surface (11), which delimits a lower displacement chamber (9) and is reduced in comparison with the upper piston surface (10),
wherein the upper displacement chamber (8) adjoins the inlet opening (4) via a first valve (13) and the first valve (13) is acted upon or can be acted upon into a closed home position,
wherein a through-opening (12a, 12b), which connects the upper displacement chamber (8) to the lower displacement chamber (9) with the interposition of a second valve (14), is arranged in or on the piston (6),
wherein the lower displacement chamber (9) transitions into the outlet opening (5) via an outlet channel (16), wherein lowering of the piston (6) on the one hand causes the first valve to open and lubricant to be drawn from the storage container into the upper displacement chamber (8) due to the development of a negative pressure in the upper displacement chamber (8) and on the other hand causes the second valve (14) to close and lubricant to be pressed from the lower displacement chamber (9) into the outlet channel (16), and
wherein raising of the piston (6) on the one hand causes the first valve (13) to close and on the other hand causes the second valve (14) in the piston (6) to open such that lubricant flows from the upper displacement chamber (8) into the lower displacement chamber (9) and lubricant is also pressed from the lower displacement chamber (9) into the outlet channel (16) .

2. The lubricant dispenser according to claim 1, **characterized in that** the first valve (13) is acted upon into a closed home position by means of a spring force and opens against the spring force when the piston (6) is lowered due to the development of a negative pressure in the upper displacement chamber (8) .

3. The lubricant dispenser according to claim 2, **characterized in that** the first valve (13) comprises a movable valve element (28) and a separate valve spring (29) acting upon the valve element (28).

4. The lubricant dispenser according to claim 2, **characterized in that** the first valve (13) has or is realized in the form of a resilient valve element (28'), which at the same time forms a valve spring (29').

5. The lubricant dispenser according to one of claims 1 to 4, **characterized in that** the upper piston surface (10) of the piston (6) can in the upper end position be moved against the first valve (13), e.g. a springloaded movable valve element (28) of the first valve (13) or against a valve (13) or valve element (28') formed by a spring element (30').

6. The lubricant dispenser according to one of claims 1 to 5, **characterized in that** the through-opening (12a) is integrated into the piston (6), e.g. into an upper piston part (6a), e.g. in the form of a central through-hole (12a), in which the second valve (14) is arranged, wherein the second valve has, e.g., a valve element that is movably guided and acted upon by a valve spring (30).

7. The lubricant dispenser according to one of claims 1 to 5, **characterized in that** the through-opening (12b) is formed by an annular chamber (12b) that surrounds the piston (6), e.g. an upper piston part (6a), and **in that** the second valve (14) has or is formed by a (resilient) seal (14') that is arranged on the piston (6), e.g. on the upper piston part (6a).

8. The lubricant dispenser according to one of claims 1 to 7, **characterized in that** the lubricant is exclusively conveyed with the pump (2) by means of suction without additional pressurization of the storage container (1).

9. The lubricant dispenser according to one of claims 1 to 8, **characterized in that** the storage container (1) is realized in the form of a container that collapses in the course of being emptied or has a collapsing inner container.

10. The lubricant dispenser according to claim 9, **characterized in that** the storage container (1) is realized in the form of a collapsing cup with a cylindrical, flexible cup shell (18') or has such a collapsing cup (17') or **in that** the storage container is realized in the form of a bellows with an accordion-like container shell (18) or has such a bellows (17).

11. The lubricant dispenser according to one of claims 1 to 10, **characterized in that** the drive (7) is realized in the form of an electromotive drive, preferably in the form of a rotary drive, e.g. with reversible rotating direction.

12. The lubricant dispenser according to one of claims 1 to 11, **characterized in that** the drive (7) is connected to the piston (6) by means of a gearing (33, 34) that converts a rotary motion of the drive into a lifting motion or linear motion of the piston (6).

13. The lubricant dispenser according to one of claims 1 to 12, **characterized in that** the upper piston surface (10) and the lower piston surface (11) are adapted to one another in such a way that the same volume is always conveyed from the lower displacement chamber into the outlet channel (16) or to the outlet opening (5) upon raising and upon lowering the piston (6).

14. The lubricant dispenser according to one of claims 1 to 13, **characterized in that** the piston (6) is guided in the pump housing (3), e.g. in a cylinder chamber within the pump housing, in a rotationally fixed manner.

15. The lubricant dispenser according to one of claims 1 to 14, **characterized in that** the stepped piston (6) has a first, upper piston part (6a) and a second piston part (6b) that is connected to the first piston part (6a) on the underside thereof, wherein the upper side of the first piston part (6a) forms the upper piston surface (10) and the underside of the first piston part (6a) forms the annular lower piston surface (11).

16. The lubricant dispenser according to one of claims 1 to 15, **characterized in that** at least part of the piston (6), e.g. the first, upper piston part (6a), has a cross section that deviates from a circular shape, e.g. an oval or slot-shaped or ellipsoidal cross section.

17. The lubricant dispenser according to one of claims 1 to 16, **characterized in that** a third valve (15), which is acted upon in the direction of the lower displacement chamber (8, 9), is arranged in or on the outlet opening (5) or in the outlet channel (16).

18. A pump (2) for a lubricant dispenser according to one of claims 1 to 17, comprising a pump housing (3), an inlet opening (4) and an outlet opening (5) and a piston (6) that is movably guided in the pump housing (3) in a linear manner, as well as a drive (7) that acts upon the piston (6),
wherein the piston (6) can be raised and lowered cyclically by means of the drive (8) in order to convey the lubricant from the inlet opening (4) to the outlet opening (5), **characterized in that**
the piston (6) is designed in a stepped manner with a piston surface, which delimits an upper displacement chamber (8), and a lower piston surface, which delimits a lower displacement chamber (9) and is reduced in comparison with the upper piston surface,
wherein the upper displacement chamber (8) adjoins the inlet opening (4) via a first valve (13) and the first valve (13) is acted upon into a closed home position,
wherein a through-opening (12a, 12b), which connects the upper displacement chamber (8) to the lower displacement chamber (9) with the interposition of a second valve (14), is arranged in or on the piston (6),
wherein the lower displacement chamber (9) transitions into the outlet opening (5) via an outlet channel (16),
wherein lowering of the piston (6) on the one hand causes the first valve (13) to open, e.g. against a spring force, due to the development of a negative pressure in the upper displacement chamber (8) such that lubricant can be drawn from the storage container (1) into the upper displacement chamber (8) and on the other hand causes the second valve (14) to close such that lubricant can be pressed from the lower displacement chamber (9) into the outlet channel (16), and
wherein raising of the piston (6) on the one hand causes the first valve (13) to close and on the other hand causes the second valve (14) in the piston (6) to open such that lubricant flows from the upper displacement chamber (8) into the lower displacement chamber (9) and lubricant is also proportionally pressed from the lower displacement chamber (9) into the outlet channel (16).

19. A storage container (1) for a lubricant dispenser according to one of claims 1 to 17, wherein the storage container (1) can be connected to a pump (2) of the lubricant dispenser,
**characterized in that** the storage container (1) is realized in the form of a container that collapses in the course of being emptied or has a collapsing inner container, wherein the storage container (1) is realized in the form of a collapsing cup (17) with a cylindrical, flexible cup shell (18') or has such a collapsing cup shell.

20. The storage container according to claim 19, wherein the flexible, cylindrical cup shell is connected, e.g. integrally connected, to a rigid cover plate (20), wherein the rigid cover plate has a connection opening (21) for the discharge of the lubricant, and wherein the rigid cover plate is designed for the connection of the storage container (1) to a pump.

## Revendications

1. Distributeur de lubrifiant, comprenant un réservoir de stockage (1) rempli de lubrifiant et une pompe (2) raccordée ou pouvant être raccordée au réservoir de stockage (1), avec laquelle le lubrifiant peut être transporté à partir du réservoir de stockage (1),
la pompe présentant
- un corps de pompe (3) doté d'un orifice d'admission (4) et d'un orifice de sortie (5),
- un piston (6) guidé en coulissement linéaire dans le corps de pompe (3) et
- un entraînement (7) agissant sur le piston (6),
la pompe (2) étant reliée ou pouvant être reliée au réservoir de stockage (1) par l'intermédiaire de son corps de pompe (3), le piston (6) pouvant être levé et abaissé de manière cyclique par l'intermédiaire de l'entraînement dans un logement de piston (6') pour transporter le lubrifiant de l'orifice d'admission (4) vers l'orifice de sortie (5),
**caractérisé en ce que**
le piston (6) est conçu en gradins avec une surface de piston supérieure (10) délimitant une chambre de refoulement (8) supérieure et une surface de piston (11) inférieure, réduite par rapport à la surface de piston (10) supérieure, délimitant une chambre de refoulement (9) inférieure,
la chambre de refoulement supérieure (8) étant adjacente à l'orifice d'admission (4) par l'intermédiaire d'une première soupape (13), la première soupape (13) étant ou pouvant être contrainte dans une position de base fermée,
dans ou sur le piston (6) étant placé un orifice de passage (12a, 12b), lequel relie la chambre de refoulement (8) supérieure à la chambre de refoulement (9) inférieure, avec interposition d'une deuxième soupape (14),
la chambre de refoulement (9) inférieure passant dans l'orifice de sortie (5) par l'intermédiaire d'un canal de sortie (16), lors de l'abaissement du piston (6) d'une part par production d'un vide dans la chambre de refoulement (8) supérieure, la première soupape s'ouvrant et du lubrifiant étant aspiré du réservoir de stockage dans la chambre de refoulement (8) supérieure et d'autre part la deuxième soupape (14) se fermant et le lubrifiant étant poussé de la chambre de refoulement (9) inférieure dans le canal de sortie (16),
lors de la levée du piston (6) d'une part la première soupape (13) se fermant et d'autre part, la deuxième soupape (14) s'ouvrant dans le piston (6) et aussi bien du lubrifiant s'écoulant de la chambre de refoulement (8) supérieure dans la chambre de refoulement (9) inférieure que du lubrifiant étant poussé de la chambre de refoulement (9) inférieure dans le canal de sortie (16).

2. Distributeur de lubrifiant selon la revendication 1, **caractérisé en ce que** la première soupape (13) est contrainte au moyen d'une force élastique dans une position de base fermée et s'ouvre lors de l'abaissement du piston (6) par production d'un vide dans la chambre de refoulement (8) supérieure, à l'encontre de la force élastique.

3. Distributeur de lubrifiant selon la revendication 2, **caractérisé en ce que** la première soupape (13) présente un élément de soupape (28) mobile et un ressort de soupape (29) séparé contraignant l'élément de soupape (28).

4. Distributeur de lubrifiant selon la revendication 2, **caractérisé en ce que** la première soupape (13) présente un élément de soupape (28') à ressort ou est conçu comme tel, lequel forme en même temps un ressort de soupape (29').

5. Distributeur de lubrifiant selon l'une quelconque des revendications 1 à 4, **caractérisé en ce que** le piston (6) peut être déplacé par sa surface de piston (10) supérieure dans la position finale supérieure contre la première soupape (13), par exemple un élément de soupape (28) mobile, contraint par un ressort de la première soupape (13) ou contre une soupape (13) formée par un élément à ressort (30') ou un élément de soupape (28').

6. Distributeur de lubrifiant selon l'une quelconque des revendications 1 à 5, **caractérisé en ce que** l'orifice de passage (12a) est intégré dans le piston (6), par exemple dans une partie supérieure (6a) de piston, par exemple en tant qu'évidement central (12a), dans lequel est disposée la seconde soupape (14), qui par exemple présente un élément de soupape guidé de manière mobile et contraint par un ressort de soupape (30) .

7. Distributeur de lubrifiant selon l'une quelconque des revendications 1 à 5, **caractérisé en ce que** l'orifice de passage (12b) est formé par un espace annulaire (12b) entourant le piston (6), par exemple une partie supérieure (6a) de piston, et **en ce que** la deuxième soupape (14) présente un joint d'étanchéité (14') (à ressort) disposé sur le piston (6), par exemple sur la partie supérieure (6a) de piston ou est formée par un tel.

8. Distributeur de lubrifiant selon l'une quelconque des revendications 1 à 7, **caractérisé en ce que** le lubrifiant est transporté exclusivement par aspiration à l'aide de la pompe (2), sans que le réservoir de stockage (1) ne soit contraint par une pression supplémentaire.

9. Distributeur de lubrifiant selon l'une quelconque des revendications 1 à 8, **caractérisé en ce que** le réservoir de stockage (1) est conçu sous la forme d'un récipient qui s'affaisse au fur et à mesure qu'il se vide ou présente un récipient interne qui s'affaisse.

10. Distributeur de lubrifiant selon la revendication 9, **caractérisé en ce que** le réservoir de stockage (1) est conçu sous la forme d'un gobelet qui s'affaisse avec une enveloppe de gobelet (18') cylindrique, souple ou présente un tel gobelet qui s'affaisse (17') ou **en ce que** le réservoir de stockage est conçu sous la forme d'un soufflet avec une enveloppe de récipient (18) en accordéon ou présente un tel soufflet (17).

11. Distributeur de lubrifiant selon l'une quelconque des revendications 1 à 10, **caractérisé en ce que** l'entraînement (7) est conçu sous la forme d'un entraînement par électromoteur, de préférence sous la forme d'un entraînement rotatif, par exemple avec un sens de rotation réversible.

12. Distributeur de lubrifiant selon l'une quelconque des revendications 1 à 11, **caractérisé en ce que** l'entraînement (7) est raccordé au piston (6) par l'intermédiaire d'un mécanisme de transmission (33, 34), qui convertit un mouvement de rotation de l'entraînement en un mouvement de course ou en un mouvement linéaire du piston (6).

13. Distributeur de lubrifiant selon l'une quelconque des revendications 1 à 12, **caractérisé en ce que** la surface supérieure (10) de piston et la surface inférieure (11) de piston sont adaptées l'une à l'autre, de telle sorte que lors de la levée et de l'abaissement du piston (6), le même volume soit toujours transporté de la chambre de refoulement inférieure dans le canal de sortie (16) ou vers l'orifice de sortie (5).

14. Distributeur de lubrifiant selon l'une quelconque des revendications 1 à 13, **caractérisé en ce que** le piston (6) est guidé de manière solidaire en rotation dans le corps de pompe (3), par exemple dans une chambre de cylindre à l'intérieur du corps de pompe.

15. Distributeur de lubrifiant selon l'une quelconque des revendications 1 à 14, **caractérisé en ce que** le piston (6) en gradins présente une première partie de piston (6a) supérieure et une deuxième partie (6b) de piston raccordée par le dessous sur la première partie (6a) de piston, le côté supérieur de la première partie (6a) de piston formant la surface supérieure (10) de piston et le côté inférieur de la première partie (6a) de piston formant la surface de piston ( 11) inférieure annulaire.

16. Distributeur de lubrifiant selon l'une quelconque des revendications 1 à 15, **caractérisé en ce que** le piston (6) présente au moins à certains endroits, par exemple sur la première partie (6a) supérieure de piston, une section transversale différente de la forme circulaire, par exemple, une section transversale ovale ou en forme de trou oblong ou en forme d'ellipse.

17. Distributeur de lubrifiant selon l'une quelconque des revendications 1 à 16, **caractérisé en ce que** dans ou sur l'orifice de sortie (5) ou dans le canal de sortie (16) est disposée une troisième soupape (15) qui est contrainte en direction de la chambre de refoulement (8, 9) inférieure.

18. Pompe (2) pour un distributeur de lubrifiant selon l'une quelconque des revendications 1 à 17, comprenant un corps de pompe (3), avec un orifice d'admission (4) et un orifice de sortie (5) et un piston (6) guidé en coulissement linéaire dans le corps de pompe (3), ainsi qu'un entraînement (7) agissant sur le piston (6),
le piston (6) pouvant être levé et abaissé cycliquement par l'entraînement pour transporter le lubrifiant de l'orifice d'admission (4) à l'orifice de sortie (5), **caractérisée en ce que**
le piston (6) est conçu en gradins avec une surface de piston (10) supérieure délimitant une chambre de refoulement (8) supérieure et une surface de piston inférieure réduite par rapport à la surface de piston supérieure, délimitant une chambre de refoulement (9) inférieure,
la chambre de refoulement supérieure (8) étant adjacente à l'orifice d'admission (4) par l'intermédiaire d'une première soupape (13), la première soupape (13) étant ou pouvant être contrainte dans une position de base fermée,
dans ou sur le piston (6) étant placé un orifice de passage (12a, 12b) qui relie la chambre de refoulement (8) supérieure à la chambre de refoulement (9) inférieure avec interposition d'une deuxième soupape (14),
la chambre de refoulement (9) inférieure passant dans l'orifice de sortie (5) par un canal de sortie (16),
lors de l'abaissement du piston (6), d'une part par production d'un vide dans la chambre de refoulement (8) supérieure, la première soupape (13) s'ouvrant par exemple à l'encontre de la force élastique et le lubrifiant étant aspiré du réservoir de stockage (1) dans la chambre de refoulement (8) supérieure et d'autre part, la deuxième soupape (14) se fermant et le lubrifiant étant poussé de la chambre de refoulement (9) inférieure dans le canal de sortie (16),
lors de la levée du piston (6), d'une part la première soupape (13) se fermant et d'autre part la deuxième soupape (14) s'ouvrant dans le piston (6) et aussi bien du lubrifiant s'écoulant de la chambre de refoulement supérieure (8) dans la chambre de refoulement inférieure (9) que du lubrifiant étant poussé proportionnellement de la chambre de refoulement (9) inférieure dans le canal de sortie (16) .

19. Réservoir de stockage (1) pour un distributeur de lubrifiant selon l'une quelconque des revendications 1 à 17, le réservoir de stockage (1) pouvant être raccordé à une pompe (2) du distributeur de lubrifiant,
**caractérisé en ce que** le réservoir de stockage (1) est conçu sous la forme d'un récipient qui s'affaisse au fur et à mesure qu'il se vide ou présente un récipient interne qui s'affaisse, le réservoir de stockage (1) étant conçu sous la forme d'un gobelet (17) qui s'affaisse, avec une enveloppe de gobelet (18') cylindrique, souple ou présentant une telle enveloppe de gobelet.

20. Réservoir de stockage selon la revendication 19, l'enveloppe de gobelet cylindrique, souple étant reliée, par exemple étant reliée par liaison de matière à un couvercle de fermeture (20) rigide, le couvercle de fermeture rigide présentant un orifice de raccordement (21) pour la sortie du lubrifiant, le couvercle de fermeture rigide étant conçu pour relier le réservoir de stockage (1) à une pompe.
